# FASCICULE DE BREVET EUROPEEN

(11) **EP 3 898 861 B1**
(45) Date de publication et mention de la délivrance du brevet: **25.01.2023**
(21) Numéro de dépôt: 19828272.5
(22) Date de dépôt: 19.12.2019
(51) Int. Cl.: C09D 183/06, C08L 83/06

(54) **PROCÉDÉ DE LUTTE CONTRE L'APPARITION DE BROUILLARD DANS UN DISPOSITIF A CYLINDRES LORS DE L'ENDUCTION DE SUPPORTS FLEXIBLES AVEC UNE COMPOSITION SILICONE LIQUIDE RÉTICULABLE**
VERFAHREN ZU BEKÄMPFUNG VON NEBELBILDUNG IN EINER VORRICHTUNG MIT ZYLINDERN BEI DER BESCHICHTUNG VON FLEXIBLEN HALTERUNGEN MIT EINER FLÜSSIGEN AUSHÄRTBAREN SILIKONZUSAMMENSETZUNG
METHOD FOR COMBATING THE APPEARANCE OF MIST IN A CYLINDER DEVICE DURING THE COATING OF FLEXIBLE SUPPORTS WITH A CROSSLINKABLE LIQUID SILICONE COMPOSITION

(30) Priorité: 20.12.2018 EP 18306764
(43) Date de publication de la demande: 27.10.2021
(73) Titulaire: Elkem Silicones France SAS, 69003 Lyon (FR)
(72) Inventeur: PIBRE, Guillaume, 63190 LEZOUX (FR); BENITOU, Stéphanie, 69560 Saint Cyr sur le Rhône (FR); POUGET, Emmanuel, 69008 LYON (FR)
(74) Mandataire: Mekki, Boualem
(86) Numéro de dépôt international: PCT/EP2019/086436
(87) Numéro de publication internationale: WO 2020/127818

(56) Documents cités:
- FR-A1- 2 894 590

## Description

L'invention se rapporte au domaine général de l'enduction silicone sur cylindres à grande vitesse de supports flexibles divers, tels que les feuilles de papier ou de polymère synthétique (polyoléfine, polyester, ...), ou bien encore de textile.

Plus précisément, l'invention concerne l'enduction de matériaux flexibles avec des compositions liquides contenant un ou plusieurs organopolysiloxanes réticulables par polyaddition, par déshydrogénocondensation, par polycondensation, par voie cationique ou par voie radicalaire de façon à former un film ou revêtement protecteur ayant notamment des propriétés d'anti-adhérence et/ou hydrophobes.

Les supports flexibles peuvent être des papiers, des cartons, des films plastiques, des films métalliques ou des textiles. Les applications de ces supports enduits de silicone sont par exemple: papier alimentaire (cuisson, emballage), étiquettes et ruban adhésif, bandes transporteuses, etc...

L'enduction de ces supports flexibles avec des silicones liquides réticulables est réalisée sur des dispositifs d'enduction fonctionnant en continu, et à très grande vitesse. Ces dispositifs comportent des têtes d'enduction constituées de plusieurs cylindres dont notamment un cylindre presseur et un cylindre enducteur, lequel est alimenté en continu en composition silicone liquide réticulable, au moyen d'une série de cylindres accolés les uns aux autres. La bande de support flexible circule à grande vitesse entre le cylindre presseur et le cylindre enducteur pour être enduite sur au moins une de ses faces d'un film silicone destiné à réticuler par l'intermédiaire de moyens de réticulation disposés en aval de la tête d'enduction. Ces moyens de réticulation peuvent être par exemple des émetteurs de chaleur, de radiations (par exemple ultraviolet) ou de faisceaux d'électrons.

Dans la course à la productivité, les fabricants de supports flexibles revêtus de silicone anti-adhérent sont demandeurs de formulations silicone liquides d'enduction, adaptées à des vitesses linéaires de défilement de la bande de supports flexibles de plus en plus élevées. Le facteur économique n'est évidement pas anodin dans cette recherche de nouvelles formulations silicone pour enduction à grande vitesse.

Or, on sait que les grandes vitesses sur des machines d'enduction en continu, sont synonymes de problèmes de transfert du film liquide silicone du cylindre enducteur sur la bande de support flexible défilante. Ces problèmes de transfert ("splitting" en anglais) se traduisent notamment par l'apparition d'un brouillard ou d'un aérosol ("misting" ou "fogging" en anglais) dans l'environnement de la tête d'enduction et, plus particulièrement, au niveau des contacts entre les cylindres en rotation et/ou entre le cylindre enducteur et le support flexible à enduire. La densité de ce brouillard ou de cet aérosol augmente lorsque la vitesse linéaire de défilement et donc la vitesse de rotation des cylindres augmente.

Ce phénomène a pour conséquence tout d'abord une perte de consommable, et surtout un dépôt de gouttelettes de liquide d'enduction sur le support en aval (par exemple au niveau du four), ce qui nuit à la qualité du revêtement.

En outre, cette formation indésirable de brouillard a des conséquences néfastes sur le plan de l'hygiène industrielle et de la sécurité des opérateurs, qui sont exposés au voisinage du dispositif d'enduction à cylindres, à une forte teneur en aérosol. Cela peut s'avérer nocif.

Par ailleurs, le brouillard provoque l'encrassement rapide du dispositif d'enduction à cylindres, d'où des contraintes d'entretien et une usure prématurée.

Pour se prémunir des conséquences de ce brouillard, on dispose en général autour de la tête d'enduction, un système d'aspiration permettant de capter ledit brouillard.

Par ailleurs, l'homme du métier connaît un certain nombre de réglages de la tête d'enduction pour contrecarrer ce phénomène. On en citera quelques exemples ci-après :
A. baisser la vitesse au détriment de la productivité ;
B. diminuer le taux de dépôt de silicone au détriment des propriétés du support flexible siliconé que l'on cherche à obtenir (aspect, couverture, anti-adhérence, propriétés mécaniques) ;
C. augmentation de la différence entre la vitesse tangentielle du cylindre enducteur et la vitesse linéaire du papier. Mais au-delà d'un certain différentiel, l'homogénéité de la couche enduite est gravement perturbée. De plus, cela permet de réduire la densité du brouillard sans pour autant l'annihiler suffisamment pour permettre une augmentation significative de la vitesse d'enduction ;
D. augmentation de la pression entre le cylindre enducteur et le cylindre presseur; là encore dans une certaine limite et sans suppression intéressante du phénomène de formation de brouillard.

Une autre approche pour lutter contre la formation de brouillard dans les machines d'enduction à cylindres, consiste à agir sur la formulation de la composition silicone liquide d'enduction.

Selon cette approche, il est connu de réduire le degré de polymérisation moyen en nombre des organopolysiloxanes constituant le liquide d'enduction silicone et, par voie de conséquence, de réduire la viscosité du bain d'enduction silicone pour limiter la densité du brouillard.

Ces méthodes connues souffrent d'un grave inconvénient qui est de modifier sensiblement les propriétés et, notamment, l'anti-adhérence du support flexible siliconé que l'on cherche à obtenir.

A titre d'illustration de cette approche au travers de la formulation silicone, on peut citer la demande de brevet internationale WO2004/046248 qui décrit l'utilisation de polymères silicone en étoile utilisés en tant qu'additif antibrouillard pour des applications de revêtement sur des supports flexibles. Le procédé de préparation de ces polymères silicones étoiles consiste à faire réagir (par hydrosilylation) de manière incomplète un organopolysiloxane comprenant des motifs réactifs =SiH avec une oléfine à longue chaîne afin d'obtenir un polyhydrogénoorganosiloxane partiellement substituée que l'on fait ensuite réagir par hydrosilylation avec une résine silicone vinylée de type MQ et une dioléfine à longue chaîne. Il est clair que de telles compositions sont relativement complexes et donc coûteuses à obtenir. Par ailleurs, elles restent encore perfectibles en ce qui concerne la lutte contre la formation de brouillard dans l'enduction silicone sur cylindres, à grande vitesse.

Le brevet européen EP0716115 décrit un procédé de fabrication d'une composition silicone d'enduction, cette composition étant présentée comme permettant la réduction de la densité de brouillard. Selon ce procédé, on met en oeuvre un polydiméthylméthylhydrogénosiloxane à extrémités triméthylsilyle de degré de polymérisation égale à 12, ainsi que 0,01% d'un polydiméthylsiloxane substitué par des fonctions perfluoroéthylbutyle et méthylvinyle, dont les extrémités sont du type diméthylvinylsiloxyle et de degré de polymérisation égale à 300, ainsi que du polypropylèneglycol et éventuellement un alcool stéarique ou oléique. Cela conduit à des polydiméthylsiloxanes fonctionnalisés par des groupements de polyoxy-propylène. Ces polydiméthylsiloxanes fonctionnalisés sont associés avec d'autres polydiméthylsiloxanes fonctionnalisés, e.g. par des motifs héxènyles ainsi qu'avec un catalyseur d'hydrosilylation à base de platine, pour former des compositions silicone d'enduction permettant de réduire la formation de brouillard. Les motifs de fonctionnalisation peuvent être des restes hydrophobes tels que des restes d'acide stéarique ou oléique.

Le brevet américain US4806391 concerne des encres et des vernis à base de silicone, et plus précisément un procédé d'application de ces encres/vernis sur un substrat, à l'aide de machine d'enduction à rouleau fonctionnant à grande vitesse. Ce brevet divulgue notamment des compositions comprenant des polydiméthylsiloxanes à extrémités vinylées de viscosité à 25°C comprise entre 15000 et 50000 mPa.s. Ces compositions liquides d'enduction comprennent également un catalyseur à base de platine et un additif rhéologique constitué par de la silice à haute surface spécifique, en particulier de la silice de combustion.

Le brevet américain US6057033 divulgue des compositions silicones destinées à être enduites sur des supports flexibles pour former après réticulation par voie cationique sous UV à un revêtement anti-adhérent. En plus des organopolysiloxanes, ces compositions comprennent des fibres de cellulose ayant une longueur moyenne comprise entre 15 et 100 µm et une épaisseur moyenne comprise entre 5 et 40µm. Les organopolysiloxanes mis en oeuvre sont des organopolysiloxanes fonctionnalisés par des groupements de réticulation du type acryloxy ou méthacryloxy, permettant la réticulation par voie radicalaire sous UV. Les fibres de cellulose incorporées dans la composition permettent d'apporter une solution au problème technique qui est d'obtenir un revêtement silicone anti-adhérent réticulé non cassant. Les fibres de cellulose sont présentées comme procurant des améliorations en ce qui concerne le transfert du film de silicone d'enduction sur le support, la résistance au découpage, les propriétés mécaniques (résistance à la tension et à la déchirure), la fixation du revêtement sur le papier, la diminution de l'absorption du liquide d'enduction au sein du papier, et accessoirement la réduction de la formation de brouillard.

Sur ce dernier point, le brevet US6057033 ne fournit aucun élément quantitatif d'appréciation de la réduction de brouillard entraîné par les fibres cellulosiques. Il y a tout lieu de penser que cette réduction demeure tout à fait insuffisante.

Plus récemment les brevets FR2894590, US8344089 et WO2017220871 décrivent des organopolysiloxanes branchés utiles comme additifs antibrouillards.

Dans un tel état de la technique, l'un des objectifs essentiels de l'invention est de proposer un procédé efficace de lutte contre l'apparition de brouillard lors de l'enduction de supports flexibles avec une composition silicone liquide précurseur de revêtements réticulés, cette enduction s'opérant à l'aide d'un dispositif d'enduction à cylindre fonctionnant à grande vitesse.

Un autre objectif essentiel de l'invention est de proposer un procédé économique et simple de lutte contre l'apparition de brouillard lors de l'enduction de supports flexibles avec une composition silicone destinée à réticuler, cette enduction s'opérant dans un dispositif d'enduction à cylindres fonctionnant à grande vitesse.

Un autre objectif essentiel de l'invention est de fournir une nouvelle composition silicone liquide X précurseur de revêtement(s) silicone ne présentant qu'une faible formation de brouillard lors de l'enduction à grande vitesse sur cylindres tout en conduisant à des revêtements silicones réticulés de très bonne qualité, en particulier en termes d'accrochage et adhérence sur le support et de profil d'anti-adhérence avec une très bonne stabilité dans le temps.

Un autre objectif essentiel de l'invention est de proposer un procédé de lutte contre l'apparition de brouillard dans le cadre de l'enduction de supports flexibles, avec une composition silicone réticulable en revêtements anti-adhérents, à l'aide d'un dispositif d'enduction à cylindre.

Tous ces objectifs, parmi d'autres, sont atteints par la présente invention qui concerne tout d'abord un procédé de lutte contre l'apparition de brouillard lors de l'enduction de supports flexibles par une composition silicone liquide **X,** réticulable par polyaddition, par déshydrogénocondensation, par polycondensation, par voie cationique ou par voie radicalaire, et précurseur de revêtement(s) silicone comprenant les étapes **I)** et **II)** suivantes :
**I)** la préparation de ladite composition silicone liquide **X** et
**II)** l'enduction de ladite composition silicone liquide **X** sur un support flexible à l'aide d'un dispositif d'enduction à cylindres,
ledit procédé étant caractérisé en ce qu'à l'étape **I)** on ajoute à ladite composition silicone liquide **X** un additif antibrouillard **E** obtenu en faisant réagir, de préférence pendant 30 minutes à 12 heures, à une température comprise entre 10°C et 100°C :
- pour 100 parties en poids d'au moins un organopolysiloxane **F** comprenant de 10 à 80 mmol de fonctions (méth)acrylate, et de préférence acrylate, pour 100 g d'organopolysiloxane **F,**
- de 0,01 à 1 parties en poids d'au moins un composé choisi parmi le groupe constitué par :
   - un organopolysiloxane **G** comprenant de 85 à 400 mmol de fonctions (méth)acrylate, et de préférence acrylate, pour 100 g d'organopolysiloxane **G,**
   - un composé organique **H** comprenant de 300 à 1000 mmol de fonctions (méth)acrylate, et de préférence acrylate, pour 100 g de composé organique **H,** et
   - leurs mélanges, et
- de 5 à 40 parties en poids d'au moins un organopolysiloxane **N** comprenant de 10 à 80 mmol de fonctions amine pour 100 g d'organopolysiloxane **N,**
les quantités desdits composés **F, G, H** et **N** mises en oeuvre sont telles que le rapport molaire initial **Ri** = **nAcr/nH** est compris entre 3,8 et 7, où **nAcr** est le nombre de moles total de fonctions (méth)acrylate des composés **F, G et H** et **nH** est le nombre de moles d'atomes d'hydrogène liés à un atome d'azote de l'organopolysiloxane **N.**

Sans vouloir limiter la portée de l'invention, la mise en contact des composés F, G, H et **N** permet d'obtenir une structure « ramifiée » ou « branchée » par la réaction de polyaddition, dite réaction de Michael, entre les fonctions (méth)acrylates et les groupements NH des fonctions amine. Par fonction amine, on entend désigner les amines primaires et secondaires. Par groupements NH on entend la somme des groupements NH contenus dans les fonctions amines primaire et secondaire. Il doit donc être compris qu'une mole de fonction amine primaire contient deux moles d'atomes d'hydrogène liés à un atome d'azote et qu'une mole de fonction amine secondaire contient une mole d'atomes d'hydrogène liés à un atome d'azote.

Pour l'ensemble document il faut comprendre que les fonctions (méth)acrylates comprennent les fonctions acrylates et les fonctions méthacrylates. Avantageusement il s'agit de fonctions acrylates.

La structure branchée obtenue lorsque les quantités des composés **F, G, H** et **N** mises en oeuvre sont telles que le rapport molaire initial **Ri** = **nAcr/nH** est compris entre 3,8 et 7, où **nAcr** est le nombre de moles total de fonctions (méth)acrylate des composés **F, G et H** et **nH** est le nombre de moles d'atomes d'hydrogène liés à un atome d'azote de l'organopolysiloxane **N,** confère à l'additif antibrouillard **E** des propriétés viscoélastiques utiles pour lutter contre l'apparition de brouillard dans un système d'enduction à cylindre fonctionnant à grande vitesse. Ces propriétés viscoélastiques se caractérisent par un aspect filant de l'additif antibrouillard **E.**

Par aspect filant on entend au sens de la présente invention la capacité à former des fils ou filaments lorsque le composé **E** est soumis à une certaine déformation. Le fil se rompt au-delà d'une certaine déformation.

Par "enduction à grande vitesse", on entend par des vitesses supérieures ou égales à 100 m/min, de préférence supérieure à 300 m/min (e.g. comprises entre 500 et 1000 m/min).

Un des avantages de ce procédé est de diminuer fortement l'apparition de brouillard dans un système d'enduction de supports flexibles avec des compositions silicones. Il est du mérite des inventeurs d'avoir sélectionné des additifs antibrouillard **E** particulièrement efficaces.

Un autre avantage de l'utilisation de cet additif antibrouillard **E** dans le procédé selon l'invention est la qualité de la réticulation par polymérisation après enduction sur les supports souples. En effet, l'évaluation de la qualité de la réticulation ou du niveau de réticulation d'un revêtement silicone se fait en évaluant le caractère huileux de la surface du revêtement en passant le doigt sur ce revêtement en sortie d'une machine d'enduction au travers d'un test métier appelé « smear » De plus, la cinétique de réticulation est tout à fait intéressante comme illustré par les faibles taux d'extractibles obtenus.

Un autre avantage de l'utilisation de cet additif antibrouillard **E** dans le procédé selon l'invention est que les propriétés des revêtements silicones réticulés sur les supports souples ne sont pas impactées, en particulier en termes d'adhésion sur le support et de profil d'anti-adhérence avec une bonne stabilité dans le temps.

La durée de la réaction entre les composé **F, G, H** et **N** pour obtenir l'additif antibrouillard **E** dépend de la nature des composés **F, G, H** et **N** et de la température. L'homme de l'art saura adapter la température et la durée de réaction pour obtenir l'additif antibrouillard **E.** A titre indicatif, à température ambiante la durée de réaction peut être comprise entre 30 minutes et 12 heures. Pour accélérer cette réaction, il peut être rajouté une quantité comprise entre 0,1 et 2% d'isopropanol dans le mélange réactionnel.

Selon un mode de réalisation particulier, l'additif antibrouillard E tel que décrit ci-dessus est obtenu à une température de réaction comprise 10 et 90°C, préférentiellement entre 10 et 75°C et encore plus préférentiellement entre 15 et 50°C.

Avantageusement, dans le procédé selon l'invention, l'additif antibrouillard E est obtenu en faisant réagir pendant 30 minutes à 12 heures, à une température comprise entre 10°C et 100°C :
- pour 100 parties en poids d'au moins un organopolysiloxane **F** comprenant de 10 à 80 mmol de fonctions (méth)acrylate, et de préférence acrylate, pour 100 g d'organopolysiloxane **F,**
- de 0,01 à 0,6 parties en poids d'au moins un composé choisi parmi le groupe constitué par:
   - un organopolysiloxane **G** comprenant de 85 à 400 mmol de fonctions (méth)acrylate, et de préférence acrylate, pour 100 g d'organopolysiloxane G,
   - un composé organique **H** comprenant de 300 à 1000 mmol de fonctions (méth)acrylate, et de préférence acrylate, pour 100 g de composé organique **H,** et
   - leurs mélanges, et
- de 5 à 40 parties en poids d'au moins un organopolysiloxane **N** comprenant de 10 à 80 mmol de fonctions amine pour 100 g d'organopolysiloxane **N,**
les quantités desdits composés **F, G, H** et **N** mises en oeuvre sont telles que le rapport molaire initial **Ri = nAcr/nH** est compris entre 3,8 et 7, où **nAcr** est le nombre de moles total de fonctions (méth)acrylate des composés **F, G et H** et **nH est** le nombre de moles d'atomes d'hydrogène liés à un atome d'azote de l'organopolysiloxane **N.**

Encore plus avantageusement, dans le procédé selon l'invention, l'additif antibrouillard E est susceptible d'être obtenu en faisant réagir pendant 30 minutes à 12 heures, à une température comprise entre 10°C et 100°C :
- pour 100 parties en poids d'au moins un organopolysiloxane F comprenant de 10 à 80 mmol de fonctions (méth)acrylate, et de préférence acrylate, pour 100 g d'organopolysiloxane **F,**
- de 0,01 à 0,3 parties en poids d'au moins un organopolysiloxane **G** comprenant de 85 à 400 mmol de fonctions (méth)acrylate, et de préférence acrylate, pour 100 g d'organopolysiloxane **G,**
- de 0,01 à 0,3 parties en poids d'au moins un composé organique **H** comprenant de 300 à 1000 mmol de fonctions (méth)acrylate, et de préférence acrylate, pour 100 g de composé organique **H,** et
- de 5 à 40 parties en poids d'au moins un organopolysiloxane **N** comprenant de 10 à 80 mmol de fonctions amine pour 100 g d'organopolysiloxane **N,**
les quantités desdits composés **F, G, H** et **N** mises en œuvre sont telles que le rapport molaire initial **Ri = nAcr/nH** est compris entre 3,8 et 7, où **nAcr** est le nombre de moles total de fonctions (méth)acrylate des composés **F, G et H** et **nH** est le nombre de moles d'atomes d'hydrogène liés à un atome d'azote de l'organopolysiloxane **N.**

Ainsi, selon un mode de réalisation préférentiel l'organopolysiloxane **N** est choisi parmi les organopolysiloxanes comprenant des motifs siloxy (I.1) et (I.2) de formules suivantes: 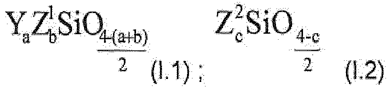 dans lesquelles :
- a= 1 ou 2, b= 0, 1 ou 2 et a+b= 1, 2 ou 3
- c = 1, 2 ou 3
- les symboles Y, identiques ou différents, représentent un groupe fonctionnel de formule (I.3) :

   -E¹-(NH-G)ₕ-(NH₂)ᵢ (I.3)
dans laquelle :
- h = 0 ou 1;
- i = 0 ou 1 ;
- h+i = 1 ou 2
- E¹ représente un radical hydrocarboné divalent aliphatique, cycloaliphatique ou aromatique comprenant de 1 à 30 atomes de carbone ; de préférence aliphatique contenant de 1 à 10 atomes de carbone ;
- lorsqu'il est présent, G représente un radical hydrocarboné aliphatique comprenant de 1 à 10 atomes de carbone, monovalent lorsque i=0 ou divalent lorsque i=1;
- les symboles Z¹ et Z², identiques ou différents, représentent un radical hydrocarboné monovalent ayant de 1 à 30 atomes de carbone et comprenant éventuellement une ou plusieurs insaturations et/ou un ou plusieurs atomes de fluor, un groupe hydroxyle, ou un radical-OR¹ avec R¹ qui représente un radical hydrocarboné en C₁-C₁₀ linéaire, cyclique ou ramifié, et de préférence Z¹ et Z² représentent un groupe hydrocarboné monovalent choisi parmi le groupe constitué par les groupes alkyles ayant de 1 à 8 atomes de carbone, les groupes alcényles ayant de 2 à 6 atomes de carbone et les groupes aryles ayant de 6 à 12 atomes de carbone comprenant éventuellement un ou plusieurs atomes de fluor, un groupe hydroxyle, ou un radical-OR¹ avec R¹ qui représente un radical hydrocarboné en C₁-C₁₀ linéaire, cyclique ou ramifié, et encore plus préférentiellement choisis parmi le groupe constitué par un groupe méthyle, éthyle, propyle, 3,3,3-trifluoropropyle, vinyle, hydroxyle, éthoxyle, méthoxyle, xylyle, tolyle et phényle ;
ledit organopolysiloxane **N** comprenant, par molécule, au moins un motif siloxy (1.1) porteur d'au moins un groupe fonctionnel de formule (I.3).

L'organopolysiloxane **N** peut présenter une structure linéaire, ramifiée, ou cyclique. Lorsqu'il s'agit d'organopolysiloxanes linéaires, ceux-ci sont essentiellement constitués de motifs siloxy «D», notamment choisis parmi le groupe constitué par les motifs siloxy Y₂SiO_{2/2}, YZ¹SiO_{2/2} et Z²₂SiO_{2/2} et de motifs siloxy « M », notamment choisis parmi le groupe constitué par les motifs siloxy Y₃SiO_{1/2}, YZ¹₂SiO_{1/2}, Y₂Z¹SiO_{1/2} et Z²₃SiO_{1/2}, les Y, Z¹ et Z² étant tels que définis ci-dessus, étant entendu que l'organopolysiloxane **N** comprend, par molécule, au moins un motif siloxy porteur d'au moins un groupe fonctionnel de formule (I.3) définie ci-dessus.

Dans un mode de réalisation particulièrement préféré, l'organopolysiloxane **N** est choisi parmi les organopolysiloxanes comprenant des motifs siloxy (I.1) et (I.2) de formules suivantes: 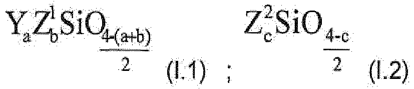 dans lesquelles :
- Y et Z¹ et Z² ont les définitions données ci-dessus ;
- a= 1 ou 2, b= 0, 1 ou 2 et a+b= 2 ou 3
- c = 2 ou 3.

De manière particulièrement préférée, l'organopolysiloxane **N** est choisi parmi les organopolysiloxanes comprenant des motifs (I.1) choisis dans le groupe constitué par YZ¹SiO_{2/2} et YZ¹₂SiO_{1/2} et des motifs (I.2) choisis dans le groupe constitué par Z²₂SiO_{2/2} et Z²₃SiO_{1/2}, les Y, Z¹ et Z² étant tels que définis ci-dessus, étant entendu que l'organopolysiloxane **N** comprend, par molécule, au moins un motif siloxy porteur d'au moins un groupe fonctionnel de formule (I.3) défini ci-dessus.

De préférence, l'organopolysiloxane **N** présente un degré de polymérisation compris entre 2 et 5000, de préférence entre 2 et 1500, de manière plus préférée entre 2 et 500.

De préférence, l'organopolysiloxane **N** comprend un nombre de motifs siloxy (1.1) compris entre 1 et 80, de préférence entre 2 et 50, de manière plus préférée entre 2 et 20.

De préférence, l'organopolysiloxane **N** comprend de 10 à 60 mmoles de fonctions amine pour 100 g d'organopolysiloxane **N** et plus préférentiellement encore de 10 à 50 mmoles de fonctions amine pour 100 g d'organopolysiloxane **N.**

De préférence, l'organopolysiloxane **N** est choisi parmi les composés de formules (II), (III), (IV) et (V) suivantes: 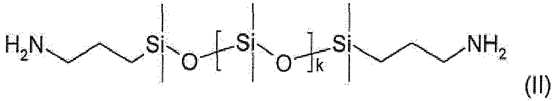 avec k=1 à 1000, de préférence 1 à 800 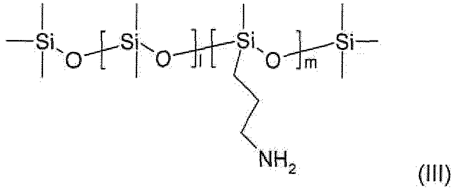 avec I=1 à 1000, de préférence 1 à 800 et m=1 à 150, de préférence 1 à 100 ; 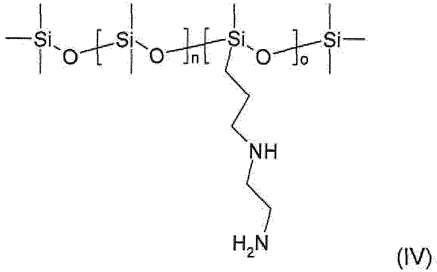 avec n=1 à 800, de préférence 1 à 400 et o=1 à 100, de préférence 1 à 50 et 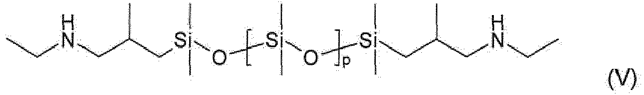 avec p=1 à 1000, de préférence 1 à 500.

Il est entendu que toutes les caractéristiques préférées définissant l'organopolysiloxane **N** peuvent être combinées entre elles.

De préférence, l'organopolysiloxane **N** présente une viscosité dynamique comprise entre 1 et 100000 mPa.s, de préférence entre 100 et 50000 mPa.s. Encore plus préférentiellement l'organopolysiloxane **N** présente une viscosité dynamique comprise entre 1000 et 20000 mPa.s.

Toutes les viscosités dont il est question dans le présent exposé correspondent à une grandeur de viscosité dynamique à 25°C dite "Newtonienne", c'est-à-dire la viscosité dynamique qui est mesurée, de manière connue en soi, avec un viscosimètre Brookfield à un gradient de vitesse de cisaillement suffisamment faible pour que la viscosité mesurée soit indépendante du gradient de vitesse.

Selon un mode de réalisation, l'organopolysiloxane **F** et l'organopolysiloxane **G** sont des organopolysiloxanes comprenant :
a1) au moins un motif de formule (VI.1) suivante :

   R⁶ₐZ³_{b}SiO_{(4-(a+b))}/2 (VI.1)

   dans laquelle :
   - les symboles R⁶, identiques ou différents, représentent chacun un groupe alkyle en C₁ à C₁₈ linéaire ou ramifié, un groupe aryle ou aralkyle en C₆ à C₁₂, éventuellement substitué, de préférence par des atomes d'halogène, ou un radical alkoxy -OR⁷ avec R⁷ étant un atome d'hydrogène ou un radical hydrocarboné comprenant de 1 à 10 atomes de carbone,
   - les symboles Z³ sont des radicaux monovalent de formule -y-(Y')ₙ dans laquelle :
      - y représente un radical polyvalent alkylène linéaire ou ramifié en C₁-C₁₈ éventuellement prolongé par des radicaux bivalents oxyalkylène ou polyoxyalkylène en C₁ à C₄ éventuellement substitué par un radical hydroxy,
      - Y' représente un radical monovalent alcénylcarbonyloxy, et
      - n est égal à 1, 2 ou 3, et de préférence n est égal à 1,
   - a est un nombre entier égal à 0, 1 ou 2, b est un nombre entier égal à 1 ou 2 et la somme a+b= 1, 2 ou 3 ; et
a2) des motifs de formule (VI.2) suivante:

   R⁸ₐSiO(₄₋ₐ₎/2 (VL2)
dans laquelle :
   - les symboles R⁸, identiques ou différents, représentent chacun un groupe alkyle en C₁ à C₁₈ linéaire ou ramifié, un groupe aryle ou aralkyle en C₆ à C₁₂, éventuellement substitué, de préférence par des atomes d'halogène, et
   - a est un nombre entier égal à 0, 1, 2 ou 3.

Selon un mode de réalisation, dans la formule (VI.1) ci-dessus, les radicaux Y' alcénylcarbonyloxy susmentionnés sont choisis parmi le groupe constitué par : le radical acryloxy [CH₂=CH-CO-O-] et les radicaux méthacryloxy : [(CH₃)CH=CH-CO-O-] et [CH₂=C(CH₃)-CO-O-].

Le symbole y dans les motifs de formule (VII.1) est choisi de préférence parmi le groupe constitué par :
-CH₂-;
-(CH₂)₂-;
-(CH₂)₃-;
-CH₂-CH(CH₃)-CH₂-;
-(CH₂)₃-O-CH₂-;
-(CH₂)₃-O-CH₂-CH(CH₃)-;
-(CH₂)₃-O-CH₂-CH(OH)-CH₂- et
-(CH₂)₃-O-CH₂-C(CH₂-CH₃)-(CH₂)₂- .

L'organopolysiloxane **F** et l'organopolysiloxane **G** peuvent présenter une structure linéaire ou ramifiée et se différencient par leur teneur en fonctions (méth)acrylates. L'organopolysiloxane **F** comprend de 10 à 80 mmol de fonctions (méth)acrylate pour 100 g d'organopolysiloxane **F** et plus préférentiellement de 20 à 60 mmol de fonctions (méth)acrylate pour 100 g d'organopolysiloxane **F.** L'organopolysiloxane **G** comprend de 85 à 400 mmol de fonctions (méth)acrylate pour 100 g d'organopolysiloxane **G** et plus préférentiellement de 150 à 250 mmol de fonctions (méth)acrylate pour 100 g d'organopolysiloxane **G.**

Selon un mode de réalisation, l'organopolysiloxane **F** et l'organopolysiloxane **G** sont choisis parmi les composés de formules (VII), (VIII) et (IX) suivantes: 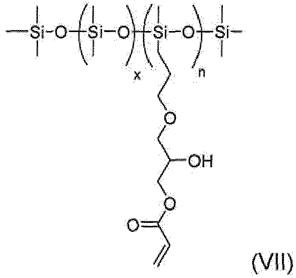 avec x =1 à 1000 et n = 1 à 100, 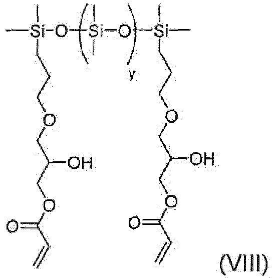 avec y =1 à 1000 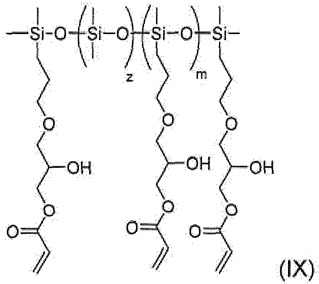 avec z =1 à 1000 et m = 1 à 100.

Selon un mode de réalisation, le composé organique **H** comprend au moins deux fonctions (méth)acrylates. Le composé organique **H** peut comprendre de deux à 5 fonctions acrylates. Le composé **H** est choisi de préférence parmi le groupe constitué par : 1,6-hexanedioldiacrylate, 1,4-butanedioldiacrylate, 1,4-butanedioldimethacrylate, ethyleneglycoldiacrylate, diethyleneglycoldiacrylate, tetraethyleneglycoldiacrylate, tripropyleneglycoldiacrylate, neopentylglycoldiacrylate, 1,3-butyleneglycoldiacrylate, tetraethyleneglycoldimethacrylate, triisopropyleneglycoidiacrylate triethyleneglycoldiacrylate, trimethylolpropanetriacrylate, trimethylolpropanetrimethacrylate, pentaerythritolmonohydroxytriacrylate, trimethylolpropanetriethoxytriacrylate, pentaerythritoltetraacrylate, ditrimethylolpropanetetraacrylate et dipentaerythritol(monohydroxy)pentaacrylate.

Plus préférentiellement, le composé **H** est choisi parmi le groupe constitué par : le 1 ,3-butylèneglycoldiacrylate, le 1,6-hexanedioldiacrylate, le 1,4-butanedioldiacrylate, le triacrylate de triméthylolpropane et leurs mélanges.

Encore plus préférentiellement le composé organique **H** est le 1,6-hexanedioldiacrylate.

Selon un mode de réalisation préférentiel le rapport molaire initial **Ri = nAcr/nH** est compris entre 4,5 et 7, plus préférentiellement entre 5 et 7 et encore plus préférentiellement entre 5,3 et 6,8.

Selon un mode de réalisation particulier, la réaction entre les composés se fait en présence d'isopropanol. Dans ce cas, la quantité d'isopropanol mise en oeuvre est comprise entre 0,1 et 2 parties en poids pour 100 parties d'organopolysiloxane **F.**

L'additif antibrouillard **E** selon l'invention est mis en oeuvre dans des quantités suffisantes pour réduire la quantité de brouillard lors de l'enduction. Bien entendu l'homme de métier, par des essais de routine, peut déterminer sans difficulté ces quantités. De préférence, l'additif antibrouillard E selon l'invention est mis en oeuvre dans une quantité supérieure à 1,5 parties en poids et de préférence comprise entre 2 et 15 parties et encore plus préférentiellement entre 2,5 et 7 parties en poids par rapport au poids total de la composition silicone liquide **X** précurseur de revêtement(s) silicone.

### COMPOSITIONS RETICULABLES

La composition silicone liquide **X** précurseur de revêtement(s) silicone mise en oeuvre dans le procédé selon l'invention est réticulable par polyaddition, par déshydrogénocondensation, par polycondensation, par voie cationique ou par voie radicalaire.

Elle est préparée en mélangeant ses différents composants. De préférence le mélange se fait à température ambiante.

Selon un mode de réalisation du procédé selon l'invention la composition silicone liquide **X** comprend :
- au moins un organopolysiloxane **A** réticulable par polyaddition, par déshydrogénocondensation, par polycondensation, par voie cationique ou par voie radicalaire,
- éventuellement au moins un composé organosilicique réticulant **B,**
- éventuellement au moins un catalyseur ou photoamorceur **C** dont la nature est choisie suivant le type de réaction envisagée pour ledit organopolysiloxane **A,**
- éventuellement, au moins un système modulateur d'adhérence **K,** et
- éventuellement au moins un inhibiteur de réticulation **D.**

Selon un mode particulier de réalisation du procédé selon l'invention, à l'étape **I)** l'organopolysiloxane **A** de la composition silicone liquide **X** précurseur de revêtement(s) silicone est un organopolysiloxane réticulable par voie radicalaire. L'organopolysiloxane **A** est alors un organopolysiloxane **A1** comprenant des fonctions méth(acrylate) et de préférence acrylate. De préférence, l'organopolysiloxane **A1** comprend :
a1) au moins un motif de formule (VI.1) suivante :

   R⁶ₐZ³_{b}SiO_{(4-(a+b))}/2 (VI.1)

   dans laquelle :
   - les symboles R⁶, identiques ou différents, représentent chacun un groupe alkyle en C₁ à C₁₈ linéaire ou ramifié, un groupe aryle ou aralkyle en Cs à C₁₂, éventuellement substitué, de préférence par des atomes d'halogène, ou un radical alkoxy -OR⁷ avec R⁷ étant un atome d'hydrogène ou un radical hydrocarboné comprenant de 1 à 10 atomes de carbone,
   - les symboles Z³ sont des radicaux monovalent de formule -y-(Y')ₙ dans laquelle :
      - y représente un radical polyvalent alkylène linéaire ou ramifié en C₁-C₁₈ éventuellement prolongé par des radicaux bivalents oxyalkylène ou polyoxyalkylène en C₁ à C₄ éventuellement substitué par un radical hydroxy,
      - Y' représente un radical monovalent alcénylcarbonyloxy, et
      - n est égal à 1, 2 ou 3, et de préférence n est égal à 1,
   - a est un nombre entier égal à 0, 1 ou 2, b est un nombre entier égal à 1 ou 2 et la somme a+b= 1, 2 ou 3 ; et
a2) des motifs de formule (VI.2) suivante:

   R⁸ₐSiO(₄₋ₐ₎/2 (VI.2)

   dans laquelle :
   - les symboles R⁸, identiques ou différents, représentent chacun un groupe alkyle en C₁ à C₁₈ linéaire ou ramifié, un groupe aryle ou aralkyle en C₆ à C₁₂, éventuellement substitué, de préférence par des atomes d'halogène, et
   - a est un nombre entier égal à 0, 1, 2 ou 3,

Selon un mode de réalisation, dans la formule (VI.1) ci-dessus, les radicaux Y' alcénylcarbonyloxy susmentionnés sont choisis parmi le groupe constitué par : le radical acryloxy [CH₂=CH-CO-O-] et les radicaux méthacryloxy : [(CH₃)CH=CH-CO-O-] et [CH₂=C(CH₃)-CO-O-].

Le symbole y dans les motifs de formule (VII.1) est choisi de préférence parmi le groupe constitué par :
-CH₂-;
-(CH₂)₂-;
-(CH₂)₃-;
-CH₂-CH(CH₃)-CH₂-;
-(CH₂)₃-O-CH₂-;
-(CH₂)₃-O-CH₂-CH(CH₃)-;
-(CH₂)₃-O-CH₂-CH(OH)-CH₂- et
-(CH₂)₃-O-CH₂-C(CH₂-CH₃)-(CH₂)₂- .

L'organopolysiloxane **A1** présente une structure linéaire ou ramifiée. L'organopolysiloxane **A1** comprend de 10 à 400 mmol de fonctions (méth)acrylate pour 100 g d'organopolysiloxane **A1** et plus préférentiellement de 20 à 300 mmol de fonctions (méth)acrylate pour 100 g d'organopolysiloxane **A1.**

Selon un mode de réalisation, l'organopolysiloxane **A1** est choisi parmi les composés de formules (VII), (VIII) et (IX) tels que décrits précédemment.

Selon cette variante de l'invention, le photoamorceur **C** mis en oeuvre dans la composition X avec l'organopolysiloxane **A1** est un photoamorceur radicalaire **C₁** qui peut être choisi parmi les cétones aromatiques qui après une exposition sous un rayonnement ultra-violet (UV):
- subissent une scission homolytique en position α de la fonction carbonyle (tels que pour les dérivés d'acylphosphonate, les dérivés d'oxyde d'acylphosphine, les dérivés des éthers de benzoïne et les dérivés de l'acétophénone) avec formation de deux fragments radicalaires, dont l'un est un radical benzoyle (photoamorceurs de type I), ou
- forment des radicaux libres lorsqu'ils sont promus dans leurs états excités par arrachement d'hydrogène d'une molécule donneur d'hydrogène (plus communément désigné par le terme « co-amorceur ») ce qui conduit à la formation d'un radical cétyle inactif et d'un radical amorceur issu du donneur correspondant (photoamorceurs de type II).

De préférence, le photoamorceur radicalaire **C1** est choisi parmi le groupe constitué par les α-hydroxycétones, les benzoïnes éther, les cétones α-amino aromatiques et les oxydes d'acylphosphine. De préférence, le photoamorceur radicalaire **C₁** est un oxyde d'acylphosphine et plus préférentiellement le photoamorceur radicalaire **C₁** est l'éthyl(2,4,6-triméthylbenzoyl)phénylphosphinate (n°CAS 84434-11-7).

Selon un autre mode de réalisation de l'invention, à l'étape I)l'organopolysiloxane **A** de la composition silicone liquide **X** précurseur de revêtement(s) silicone est un organopolysiloxane réticulable par polyaddition. L'organopolysiloxane **A** est alors un organopolysiloxane **A2** comprenant au moins deux motifs siloxy de formule (X.1) avec éventuellement au moins une partie des autres motifs étant des motifs siloxy de formule (X.2) 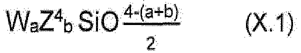 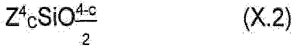 formules dans lesquelles :
- W est un groupe alcényle, de préférence vinyle ou allyle,
- les symboles Z⁴, identiques ou différents, représentent :
   - un radical alkyle linéaire ou ramifié contenant 1 à 20 atomes de carbone, éventuellement substitué par au moins un halogène, de préférence le fluor, les radicaux alkyles étant de préférence méthyle, éthyle, propyle, octyle et 3,3,3-trifluoropropyle,
   - un radical cycloalkyle contenant entre 5 et 8 atomes de carbone cycliques, éventuellement substitué,
   - un radical aryle contenant entre 6 et 12 atomes de carbone éventuellement substitué, et/ou
   - une partie aralkyle ayant une partie alkyle contenant entre 5 et 14 atomes de carbone et une partie aryle contenant entre 6 et 12 atomes de carbone, substituée éventuellement sur la partie aryle par des halogènes et/ou des alkyles.
- a est 1 ou 2, de préférence égal à 1, b est 0, 1 ou 2 et a + b = 1, 2 ou 3, et
- c = 0, 1, 2 ou 3.

Des exemples d'organopolysiloxanes **A2** réticulables par polyaddition sont les diméthylpolysiloxanes à extrémités diméthylvinylsilyle, les copolymères méthylvinyldiméthylpolysiloxanes à extrémités triméthylsilyle, les copolymères méthylvinyldiméthylpolysiloxanes à extrémités diméthylvinylsilyle.

Selon cette variante, le composé organosilicique réticulant B est un composé B2 comprenant au moins trois motifs siloxy de formule (XI.1) avec éventuellement au moins une partie des autres motifs étant des motifs siloxy de formule (XI.2) :

HLcSiO_{(3-c)}/₂ (XI.1)

L_{g}SiO_{(4-g)}/₂ (XI.2)

dans lesquelles :
- H est un atome d'hydrogène,
- les symboles L, identiques ou différents, représentent :
   - un radical alkyle linéaire ou ramifié contenant 1 à 20 atomes de carbone, éventuellement substitué par au moins un halogène, de préférence le fluor, les radicaux alkyles étant de préférence méthyle, éthyle, propyle, octyle et 3,3,3-trifluoropropyle,
   - un radical cycloalkyle contenant entre 5 et 8 atomes de carbone cycliques, éventuellement substitué,
   - un radical aryle contenant entre 6 et 12 atomes de carbone éventuellement substitué, et/ou
   - une partie aralkyle ayant une partie alkyle contenant entre 5 et 14 atomes de carbone et une partie aryle contenant entre 6 et 12 atomes de carbone, substituée éventuellement sur la partie aryle par des halogènes et/ou des alkyles,
- c = 0, 1 ou 2, et
- g= 0, 1, 2 ou 3.

Des exemples de composé organosilicique réticulant **B2** sont, par exemple :
- les polymères diméthylpolysiloxane à extrémités hydrogénodiméthylsilyle,
- les polymères poly(diméthylsiloxy) (méthylhydrogénosiloxy) α,ω-diméthylhydrogénosiloxy,
- MDD^{H} : les copolymères à motifs (diméthylsiloxy)(hydrogénométhylsiloxy) à extrémités triméthylsilyle,
- M^{H}DD^{H} : les copolymères à motifs (diméthylsiloxy)(hydrogénométhylsiloxy) à extrémités hydrogénodiméthylsilyle,
- MD^{H} : les hydrogénométhylpolysiloxanes à extrémités triméthylsilyle,

Toujours selon cette variante, le catalyseur **C** est un catalyseur de polyaddition **C2.** Le catalyseur de polyaddition **C2** peut être composé d'au moins un métal appartenant au groupe du platine. Ce catalyseur peut notamment être choisi parmi les composés du platine et du rhodium mais aussi parmi des composés de silicium comme ceux décrits dans les demandes de brevet WO2015004396 et WO2015004397, des composés de germanium comme ceux décrits dans les demandes de brevet WO2016075414 ou des complexes de nickel, cobalt ou fer comme ceux décrits dans les demandes de brevet WO2016071651, WO2016071652 et WO2016071654. Le catalyseur généralement préféré est le platine. Dans ce cas, la quantité pondérale du catalyseur de polyaddition **C2,** calculée en poids de platine-métal, est généralement comprise entre 2 et 400 ppm.

Selon un autre mode de réalisation de l'invention, à l'étape **I)** l'organopolysiloxane **A** de la composition silicone liquide **X** précurseur de revêtement(s) silicone est un organopolysiloxane réticulable par polycondensation. L'organopolysiloxane **A** est alors un organopolysiloxane **A3** linéaire ou ramifié porteur de groupements hydroxyles ou de groupements hydrolysables, par exemple alcoxy, qui réticulent à température ambiante par des réactions de polycondensation sous l'action de l'humidité, en présence généralement d'un catalyseur **C3.** Le catalyseur **C3** est un catalyseur des réactions de polycondensation. Les catalyseurs de polycondensation sont largement connus de l'homme du métier. Sans vouloir se limiter, le catalyseur **C3** pourra entre autres être choisi parmi les composés à base d'étain largement connus de l'homme du métier ou parmi les catalyseurs organiques comme les guanidines décrites dans les demandes de brevet EP2268743 et EP2367867 ou parmi les complexes métalliques par exemple à base de Zn, Mo, Mg, etc. décrits dans les demandes de brevet EP2222626, EP2222756, EP2222773, EP2935489, EP2935490 et WO2015/082837.Toujours selon cette variante, le composé organosilicique réticulant **B** est un composé **83** qui est un composé portant au moins 3 groupements hydrolysables, de préférence des groupements alcoxy, comme par exemple un silicate, un alkyltrialcoxysilane ou un aminoalkyle trialcoxysilane.

Selon un autre mode de réalisation de l'invention, à l'étape **I)** l'organopolysiloxane **A** de la composition silicone liquide **X** précurseur de revêtement(s) silicone est un organopolysiloxane réticulable par déshydrogénocondensation. L'organopolysiloxane **A** est alors un organopolysiloxane **A4** linéaire, ramifié ou réticulé porteur de groupements hydroxyles. Selon cette variante, le composé organosilicique réticulant **B** est un composé **B4** qui est un organopolysiloxane linéaire, ramifié ou réticulé porteurs de groupements hydrogénosilyles ou SiH. La réaction de déshydrogénocondensation entre l'organopolysiloxane **A4** et le réticulant **B4** a lieu en présence d'un catalyseur **C4.** Sans vouloir se limiter, le catalyseur **C4** peut être choisi parmi les composés métalliques par exemple à base de platine ou iridium ou organiques par exemple de type guanidine telles que décrites dans les demandes de brevet EP2443207 et EP2443208.

Selon un autre mode de réalisation de l'invention, à l'étape **I)** l'organopolysiloxane **A** de la composition silicone liquide **X** précurseur de revêtement(s) silicone est un organopolysiloxane réticulable par voie cationique. L'organopolysiloxane **A** est alors un organopolysiloxane **A5** comprenant au moins une fonction réactive G choisie parmi le groupe constitué par les fonctions : époxy, alcényléther, oxétane et dioxolane. Ces organopolysiloxanes **A5** réticulent en présence d'une quantité efficace d'un photoamorceur **C** qui est un photoamorceur cationique **C5** du type des sels d'onium par l'intermédiaire d'une activation par rayonnement actinique (UV) ou par faisceaux d'électrons. De préférence, le photoamorceur **C5** est un borate d'iodonium, par exemple tel que décrit dans les documents EP-562897 et EP-2904021. Un exemple spécifique est le borate d'iodonium suivant :

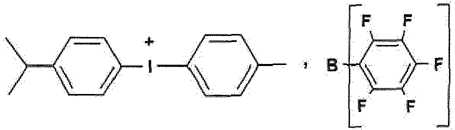

Les organopolysiloxanes **A5** qui peuvent être des organopolysiloxanes époxy ou vinyloxyfonctionnels sont décrits notamment dans les brevets DE-4 009 889, EP-0 396 130, EP- 0 355 381, EP-0 105 341, FR-2 110 115, FR-2 526 800. Les organopolysiloxanes époxy fonctionnels peuvent être préparés par réactions d'hydrosilylation entre des huiles à motifs =SiN et des composés époxy-fonctionnels tels que le 1,2-époxy-4-vinyl-4-cyclohexane (VCMX) ou allyl-glycidyléther. Les organopolysiloxanes vinyloxyfonctionnels peuvent être préparés par réaction d'hydrosilylation entre des huiles à motifs SiH et des composés vinyloxyfonctionnels tels que l'allylvinyléther ou l'allyl- vinyloxyéthoxybenzène.

Quand il est présent, l'inhibiteur de réticulation **D** est en général utilisé pour conférer à la composition prête à l'emploi, une certaine durée de vie en pot (« pot-life »). Ces inhibiteurs de réticulation sont notamment présents lorsque à l'étape **I)** l'organopolysiloxane **A** de la composition silicone liquide **X** précurseur de revêtement(s) silicone est un organopolysiloxane réticulable par polyaddition ou déshydrogénation et que le catalyseur **C** mis en œuvre est à base de platine. L'inhibiteur de réticulation **D** est de préférence choisi parmi les alcools acétyléniques (éthynylcyclohexanol : ECH), les diallylmaléates, les triallylisocyanurates, les dialkylmaléates (diéthylmaléates ou dialkylalcinyledicarboxylates) (diéthyleacéthylène dicarboxylate) ou bien encore parmi les organopolysiloxanes, avantageusement cycliques et substitués par au moins un alcényle, le tétraméthylvinylcyclotétrasiloxane étant particulièrement préféré, ou les maléates alkylés. Les alcools acétyléniques sont des retardateurs utiles selon l'invention. On peut citer à titre d'exemples :
- l'éthynyl-1-cyclohexanol 1 ;
- le méthyl-3 dodécyne-1 ol-3 ;
- le triméthyl-3,7,11 dodécyne-1 ol-3 ;
- le diphényl-1,1 propyne-2 of-1 ;
- l'éthyl-3 éthyl-6 nonyne-1 ol-3 ;
- le méthyl-3 pentadécyne-1 ol-3.

Dans la composition silicone liquide **X** précurseur de revêtement(s) silicone, il peut-être avantageux de mettre en oeuvre au moins un système modulateur d'adhérence **K,** pour permettre le contrôle des propriétés d'anti-adhérence du revêtement silicone réticulé. A titre d'illustration, le système modulateur d'adhérence **K** peut être :
- dans le cas d'une formulation réticulant par polyaddition : une résine polyorganosiloxane de formule MD^{Vi}Q ; MM^{Vi}Q ; MM^{Vi}D^{Vi}Q ; MM^{Vi}DD^{Vi}Q ; MD^{H}Q ou MM^{H}Q (avec Vi= groupement vinyle)
- dans le cas d'une formulation réticulant par polycondensation ou déshydrogénocondensation : une résine polyorganosiloxane de formule M^{OH}Q, et
- dans le cas d'une formulation réticulant sous rayonnement : une résine polyorganosiloxane de formule MD^{H}Q ou MM^{H}Q.

Il est rappelé que :
- le symbole « D » désigne un motif siloxy de formule (CH₃)₂SiO_{2/2}
- le symbole « D^{Vi} » désigne un motif siloxy de formule (CH₃)(vinyle)SiO_{2/2}
- le symbole « D^{H} » désigne un motif siloxy de formule (CH₃)HSiO_{2/2}
- le symbole « M » désigne un motif siloxy de formule (CH₃)₃SiO_{1/2}
- le symbole « M^{Vi} » désigne un motif siloxy de formule (CH₃)₂(vinyle)SiO_{1/2}
- le symbole « M^{H} » désigne un motif siloxy de formule (CH₃)₂HSiOi_{1/2}
- le symbole « M^{OH} » désigne un motif siloxy de formule (CH₃)₂(OH)SiO_{1/2}
- et le symbole « Q » désigne un motif siloxy de formule SiO_{4/2}.

Selon une variante préférée du procédé selon l'invention, à l'étape **I)** la composition silicone liquide **X** précurseur de revêtement(s) silicone à laquelle on ajoute l'additif antibrouillard **E** comprend :
- au moins un organopolysiloxane **A1** réticulable par voie radicalaire,
- au moins un photoamorceur radicalaire **C1;** et
- éventuellement au moins un système modulateur d'adhérence **K.**

L'organopolysiloxane **A1** et le photoamorceur **C1** sont tels que définis ci-dessus.

Selon une variante préférée du procédé selon l'invention, à l'étape **I)** la composition silicone liquide **X** précurseur de revêtement(s) silicone à laquelle on ajoute l'additif antibrouillard **E** comprend :
- au moins un organopolysiloxane **A2** réticulable par polyaddition,
- au moins un composé organosilicique réticulant **B2,**
- au moins un catalyseur **C2,**
- éventuellement, au moins un système modulateur d'adhérence **K,** et
- éventuellement au moins un inhibiteur de réticulation **D.**

L'organopolysiloxane **A2,** le réticulant **B2,** le catalyseur **C2,** le système modulateur d'adhérence **K** et l'inhibiteur de réticulation **D** sont tels que définis ci-dessus.

Selon une autre variante du procédé selon l'invention, à l'étape **I)** la composition silicone liquide **X** précurseur de revêtement(s) silicone à laquelle on ajoute l'additif antibrouillard **E** comprend :
- au moins un organopolysiloxane **A3** réticulable par polycondensation
- au moins un additif antibrouillard **E** tel que décrit ci-dessus,
- au moins un composé organosilicique réticulant **B3,**
- au moins un catalyseur **C3,** et
- éventuellement, au moins un système modulateur d'adhérence **K.**

L'organopolysiloxane **A3,** le réticulant **B3,** le catalyseur **C3** et le système modulateur d'adhérence **K** sont tels que définis ci-dessus.

Selon une autre variante du procédé selon l'invention, à l'étape **I)** la composition silicone liquide **X** précurseur de revêtement(s) silicone à laquelle on ajoute l'additif antibrouillard **E** comprend :
- au moins un organopolysiloxane **A4** réticulable par déshydrogénocondensation,
- au moins un composé organosilicique réticulant **B4,**
- au moins un catalyseur **C4,** et
- éventuellement au moins un système modulateur d'adhérence **K,** et
- éventuellement au moins un inhibiteur de réticulation **D.**

L'organopolysiloxane **A4,** le réticulant **B4,** le catalyseur **C4,** le système modulateur d'adhérence **K** et l'inhibiteur de réticulation **D** sont tels que définis ci-dessus.

Selon une autre variante du procédé selon l'invention, à l'étape **I)** la composition silicone liquide **X** précurseur de revêtement(s) silicone à laquelle on ajoute l'additif antibrouillard **E** comprend :
- au moins un organopolysiloxane **A5** réticulable par voie cationique,
- au moins un photoamorceur **C5** et
- éventuellement au moins un système modulateur d'adhérence **K.**

L'organopolysiloxane **A5,** le photoamorceur **C5** et le système modulateur d'adhérence **K** sont tels que définis ci-dessus.

Outre ces constituants, la composition silicone liquide **X** précurseur de revêtement(s) silicone peut également contenir au moins un additif courant dans les compositions silicone réticulant par polyaddition, par polycondensation, par déshydrogénocondensation, par voie cationique ou par voie radicalaire. On peut citer par exemple, les pigments et les charges **P.** Les charges **P** sont de préférence des charges minérales. Ces charges peuvent se présenter sous la forme de produits très finement divisés ; parmi ces charges figurent les silices de combustion et les silices de précipitation : leur surface spécifique est par exemple égale ou supérieure à 40 m²/g, et se situe le plus souvent dans l'intervalle 40-300 m²/g. Ces charges **P** peuvent également se présenter sous la forme de produits plus grossièrement divisés, de diamètre particulaire moyen par exemple supérieur à 1 µm. Comme exemples de telles charges, on peut citer le quartz broyé, les silices de diatomées, les oxydes de fer, de zinc, de magnésium, les différentes formes d'alumine (hydratée ou non) ; leur surface spécifique est par exemple égale ou inférieure à 30 m²/g. Les charges **P** peuvent avoir été modifiées en surface, par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes. Les charges traitées renferment, dans la plupart des cas, de 2 à 20 % de leur poids de composés organosiliciques.

Un autre objet de l'invention concerne le procédé de préparation de l'additif antibrouillard E en faisant réagir, de préférence pendant 30 minutes à 12 heures, à une température comprise entre 10°C et 100°C :
- pour 100 parties en poids d'au moins un organopolysiloxane **F** comprenant de 10 à 80 mmol de fonctions (méth)acrylate pour 100 g d'organopolysiloxane **F,**
- de 0,01 à 1 parties en poids d'au moins un composé choisi parmi le groupe constitué par :
   - un organopolysiloxane **G** comprenant de 85 à 400 mmol de fonctions (méth)acrylate, et de préférence acrylate, pour 100 g d'organopolysiloxane **G,**
   - un composé organique **H** comprenant de 300 à 1000 mmol de fonctions (méth)acrylate, et de préférence acrylate, pour 100 g de composé organique **H,** et
   - leurs mélanges, et
- de 5 à 40 parties en poids d'au moins un organopolysiloxane **N** comprenant de 10 à 80 mmol de fonctions amine pour 100 g d'organopolysiloxane **N,**
les quantités desdits composés **F, G, H** et **N** mises en oeuvre sont telles que le rapport molaire initial **Ri = nAcr/nH** est compris entre 3,8 et 7 où **nAcr** est le nombre de moles total de fonctions (méth)acrylate des composés **F, G** et **H** et **nH** est le nombre de moles d'atomes d'hydrogène liés à un atome d'azote de l'organopolysiloxane **N.**

Avantageusement, pour préparer l'additif antibrouillard E selon le procédé selon l'invention on fait réagir, de préférence pendant 30 minutes à 12 heures, à une température comprise entre 10°C et 100°C :
- pour 100 parties en poids d'au moins un organopolysiloxane F comprenant de 10 à 80 mmol de fonctions (méth)acrylate, et de préférence acrylate, pour 100 g d'organopolysiloxane **F,**
- de 0,01 à 0,6 parties en poids d'au moins un composé choisi parmi le groupe constitué par:
   - un organopolysiloxane **G** comprenant de 85 à 400 mmol de fonctions (méth)acrylate, et de préférence acrylate, pour 100 g d'organopolysiloxane **G,**
   - un composé organique **H** comprenant de 300 à 1000 mmol de fonctions (méth)acrylate, et de préférence acrylate, pour 100 g de composé organique **H,** et
   - leurs mélanges, et
- de 5 à 40 parties en poids d'au moins un organopolysiloxane **N** comprenant de 10 à 80 mmol de fonctions amine pour 100 g d'organopolysiloxane **N,**
les quantités desdits composés **F, G, H** et **N** mises en œuvre sont telles que le rapport molaire initial **Ri = nAcr/nH** est compris entre 3,8 et 7 où **nAcr** est le nombre de moles total de fonctions (méth)acrylate des composés F, G et H et **nH** est le nombre de moles d'atomes d'hydrogène liés à un atome d'azote de l'organopolysiloxane **N.**

Avantageusement, pour préparer l'additif antibrouillard **E** selon le procédé selon l'invention on fait réagir, de préférence pendant 30 minutes à 12 heures, à une température comprise entre 10°C et 100°C :
- pour 100 parties en poids d'au moins un organopolysiloxane **F** comprenant de 10 à 80 mmol de fonctions (méth)acrylate et de préférence acrylate par 100 g,
- de 0,01 à 0,3 parties en poids d'au moins un organopolysiloxane **G** comprenant de 65 à 300 mmol de fonctions (méth)acrylate et de préférence acrylate par 100 g,
- de 0,01 à 0,3 parties en poids d'au moins et un composé organique **H** comprenant de 300 à 1000 mmol de fonctions (méth)acrylate et de préférence acrylate par 100 g, et
- de 5 à 40 parties en poids d'au moins un organopolysiloxane **N** comprenant de 10 à 80 mmol de fonctions amine par 100 g,
les quantités desdits composés **F, G, H** et **N** mises en oeuvre sont telles que le rapport molaire initial **Ri = nAcr/nH** est compris entre 3,8 et 7 où **nAcr** est le nombre de moles total de fonctions (méth)acrylate des composés F, G et H et **nH** est le nombre de moles d'atomes d'hydrogène liés à un atome d'azote de l'organopolysiloxane **N.**

Un autre objet de l'invention est l'additif antibrouillard E susceptible d'être obtenu par le procédé selon l'invention décrit ci-dessus. Ces additifs antibrouillards **E** présentent l'avantage de posséder les propriétés visco-élastiques nécessaires pour avoir un excellent comportement en tant qu'additifs antibrouillard.

Un autre objet de l'invention concerne une composition silicone liquide **X** précurseur de revêtement(s) silicone réticulable par polyaddition, par déshydrogénocondensation, par polycondensation, par voie cationique ou par voie radicalaire, comprenant un additif antibrouillard E obtenu par le procédé selon l'invention décrit ci-dessus.

Un autre objet de l'invention concerne une composition silicone liquide **X** précurseur de revêtement(s) silicone comprenant :
- au moins un organopolysiloxane **A** réticulable par polyaddition, par déshydrogénocondensation, par polycondensation, par voie cationique ou par voie radicalaire,
- au moins un additif antibrouillard **E** susceptible d'être obtenu par le procédé ci-dessus,
- éventuellement au moins un composé organosilicique réticulant **B,**
- éventuellement au moins un catalyseur ou photoamorceur **C** dont la nature est choisie suivant le type de réaction envisagée pour ledit organopolysiloxane **A,**
- éventuellement, au moins un système modulateur d'adhérence **K,** et
- éventuellement au moins un inhibiteur de réticulation **D.**

L'organopolysiloxane **A,** l'additif antibrouillard **E,** le catalyseur ou photoamorceur **C,** le système modulateur d'adhérence **K** et l'inhibiteur de réticulation **D** sont tels que définis ci-dessus.

Selon une variante de l'invention, la composition silicone liquide **X** précurseur de revêtement(s) silicone comprend :
- au moins un organopolysiloxane **A1** réticulable par voie radicalaire,
- au moins un additif antibrouillard **E** susceptible d'être obtenu par le procédé ci-dessus,
- au moins un photoamorceur radicalaire **C1;** et
- éventuellement au moins un système modulateur d'adhérence **K.**

L'organopolysiloxane **A1,** l'additif antibrouillard **E,** le photoamorceur **C1** et le système modulateur d'adhérence **K** sont tels que définis ci-dessus.

Selon une autre variante de l'invention la composition silicone liquide **X** précurseur de revêtement(s) silicone comprend :
- au moins un organopolysiloxane **A2** réticulable par polyaddition,
- au moins un additif antibrouillard **E** susceptible d'être obtenu par le procédé ci-dessus,
- au moins un composé organosilicique réticulant **B2,**
- au moins un catalyseur **C2,**
- éventuellement, au moins un système modulateur d'adhérence **K,** et
- éventuellement au moins un inhibiteur de réticulation **D.**

L'organopolysiloxane **A2,** l'additif antibrouillard **E,** le réticulant **B2,** le catalyseur **C2,** le système modulateur d'adhérence **K** et l'inhibiteur de réticulation **D** sont tels que définis ci-dessus.

Selon un autre mode de réalisation préféré, la composition silicone liquide **X** précurseur de revêtement(s) silicone comprend :
- au moins un organopolysiloxane **A3** par polycondensation
- au moins un additif antibrouillard **E** susceptible d'être obtenu par le procédé ci-dessus,
- au moins un composé organosilicique réticulant **B3,**
- au moins un catalyseur **C3,** et
- éventuellement, au moins un système modulateur d'adhérence **K.**

L'organopolysiloxane **A3,** l'additif antibrouillard **E,** le réticulant **B3,** le catalyseur **C3** et le système modulateur d'adhérence **K** sont tels que définis ci-dessus.

Selon un autre mode de réalisation préféré, la composition silicone liquide **X** précurseur de revêtement(s) silicone comprend :
- au moins un organopolysiloxane **A4** réticulable par déshydrogénocondensation,
- au moins un additif antibrouillard **E** susceptible d'être obtenu par le procédé ci-dessus,
- au moins un composé organosilicique réticulant **B4,**
- au moins un catalyseur **C4** dont la nature, et
- éventuellement au moins un système modulateur d'adhérence **K,** et
- éventuellement au moins un inhibiteur de réticulation **D.**

L'organopolysiloxane **A4,** l'additif antibrouillard **E,** le réticulant **B4,** le catalyseur **C4,** le système modulateur d'adhérence **K** et l'inhibiteur de réticulation **D** sont tels que définis ci-dessus.

Selon un autre mode de réalisation préféré, la composition silicone liquide **X** précurseur de revêtement(s) silicone comprend :
- au moins un organopolysiloxane **A5** réticulable par voie cationique,
- au moins un additif antibrouillard **E** susceptible d'être obtenu par le procédé ci-dessus,
- au moins un photoamorceur **C5** et
- éventuellement au moins un système modulateur d'adhérence **K.**

L'organopolysiloxane **A5,** l'additif antibrouillard **E,** le photoamorceur **C5** et le système modulateur d'adhérence **K** sont tels que définis ci-dessus.

Le dernier objet de l'invention concerne l'utilisation de l'additif antibrouillard **E** tel que défini ci-dessus pour réduire l'apparition de brouillard lors de l'enduction de supports flexibles avec une composition silicone liquide **X** précurseur de revêtement(s) silicone.

Il apparaît donc que l'invention propose un moyen original, simple, économique et fiable de lutte contre la production de brouillard lors de l'enduction de supports flexibles (par exemple en papier, en polymère synthétique (polyoléfine, polyester...), ou bien encore en textile) dans des dispositifs d'enduction à cylindre fonctionnant à grande vitesse. La conséquence industrielle pratique est que les vitesses de défilement peuvent être augmentées sans qu'apparaisse ce phénomène de brouillard nuisible à la qualité de l'enduction. Le moyen de lutte proposé par l'invention a également pour avantage non négligeable de ne pas nuire aux qualités d'aspect, à la couverture, aux propriétés d'anti-adhérence, ainsi qu'aux propriétés mécaniques (rub-off) du revêtement réticulé silicone que l'on cherche à obtenir sur au moins une des faces du support flexible.

Par ailleurs, la réduction du brouillard améliore de façon significative les conditions d'hygiène et de sécurité pour le personnel en poste auprès de dispositifs industriels d'enduction silicone sur cylindres fonctionnant à grande vitesse.

Les exemples, qui suivent ont pour vocation d'illustrer des modes de réalisation particuliers de l'invention sans pour autant limiter la portée de l'invention à ces simples modes de réalisation.

### EXEMPLES

### I) Préparation des additifs antibrouillard E :

Dans les exemples ci-dessous, les composés suivants ont été mis en œuvre.

**F1:** Organopolysiloxane de formule suivante avec 31 mmol de fonctions acrylate pour 100 grammes.

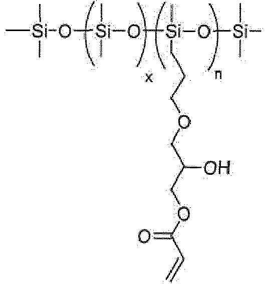

**F2: Silmer ACR Di-50^{®}** fournisseur Siltech Corporation qui est un dimethylpolysiloxane avec deux fonctions acrylates en bout de chaîne avec 50 mmol de fonction acrylate pour 100 grammes.

**G1:** Organopolysiloxane de même formule globale que **F1 avec** 199 mmol de fonctions acrylate pour 100 grammes.

**H1:** Hexanediolacrylate avec 885 mmol de fonctions acrylate pour 100 grammes.

**N1** : Organopolysiloxane de formule suivante avec 43 mmol de fonctions amine pour 100 grammes.

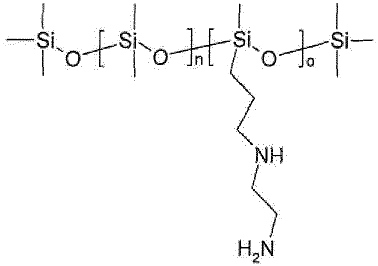

### Isopropanol

### Synthèse des polymères branchés :

Tous les composés testés comme additifs antibrouillards ont été synthétisés par le même procédé.

Dans un flacon on introduit les composés **F, G, H** et **N** dans les proportions détaillées dans le tableau 1 ci-dessous. Eventuellement, on peut introduire une petite quantité d'isopropanol entre 0,1 et 1 grammes pour accélérer la réaction. Le flacon est fermé et ensuite maintenu fermé et sous agitation sur un tapis pendant 2 à 24 heures à température ambiante.

**Ri** représente le rapport molaire initial entre le nombre de moles total de fonctions (méth)acrylate des composés **F, G** et **H** et le nombre de moles d'atomes d'hydrogène liés à un atome d'azote de l'organopolysiloxane **N.** Une évaluation qualitative du caractère filant du polymère obtenu est ensuite réalisée avec une spatule (formation de fils ou pas). Le caractère filant est nécessaire pour que le composé confère des propriétés antibrouillard lorsqu'il est ajouté à une composition silicone.

| Parties en poids | Comparatif 1 | Exemple 1 | Exemple 2 | Exemple 3 | Exemple 4 | Exemple 5 | Comparatif 2 |
|---|---|---|---|---|---|---|---|
| **F1** | 100 | 100 | 100 | 100 | | | 100 |
| **F2** | | | | | 100 | 100 | |
| **G1** | 0,050 | 0,033 | 0,029 | 0,028 | | 0,047 | 0,021 |
| **H1** | 0 | 0,033 | 0,029 | 0,028 | 0,047 | 0 | 0,021 |
| **N1** | 20 | 13,3 | 11,8 | 11,1 | 18,9 | 18,9 | 10 |
| **Ri** | 3,62 | 5,47 | 6,19 | 6,55 | 6,18 | 6,14 | 7,26 |
| **Caractère filant** | NON | OUI | OUI | OUI | OUI | OUI | NON |

### II) Test comme additif antibrouillard

Les polymères branchés des exemples 2 et 3, présentant un caractère filant, ont été testés comme additifs antibrouillard.

### Description du test

Pour analyser et quantifier le brouillard produit dans un dispositif d'enduction à cylindres fonctionnant à grande vitesse, on a mis en oeuvre à l'échelle du laboratoire un « pilote misting » avec un néphélomètre (Portable Dust Monitor Series 1.100 de GRIMM) qui permet de mesurer la densité des particules dont la taille est supérieure à 0,5µm, soit l'intégralité des particules émises dans l'atmosphère.

Le dispositif d'enduction (fourni par la société Ermap, France) comprend 2 rouleaux et permet de faire défiler une bande de papier à une vitesse linéique de 50 à 920 m/min. Les deux cylindres presseur/enducteur présentent un diamètre de 10 cm. Le cylindre presseur est recouvert de caoutchouc et le cylindre enducteur de chrome. Le cylindre enducteur a été taillé en haltère de sorte que la vitesse des deux cylindres soit synchrone. Le cylindre presseur entrainable par un moteur, est en contact sous pression constante avec le cylindre enducteur. Le liquide silicone d'enduction est versé directement dans l'entrefer entre les deux rouleaux. La quantité de fluide utilisée est 0,25 ml.

Le néphélomètre mesure la densité de particules dans le brouillard ou aérosol exprimée en µg/m³.

Les performances antibrouillard des différents additifs ont été testées dans une composition silicone réticulable par voie radicalaire composée de 95 parties de composé A1 et 5 parties de composé A2, tous les deux de formule suivante : 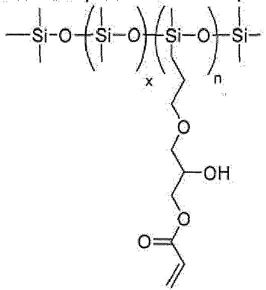 avec pour A1 (x=82 et n=7) et pour A2 (x=220 et n=4) et d'une partie d'éthyl(2,4,6-triméthylbenzoyl)phénylphosphinate (n°CAS 84434-11-7) comme photoamorçeur.

A la composition décrite ci-dessus sont rajoutées différentes quantités des polymères issus des exemples 2 et 3 préparés selon le tableau 1. Le mélange est agité pour l'homogénéiser.

Les résultats de mesure de la densité de brouillard sont exprimés en µg/m³ et présentés dans le Tableau 2 suivant :

**Tableau 2 : Mesure densité de brouillard en µg/m³**

| **Vitesse m/min** | **Sans additif** | **E2** 5 parties | **E3** 1 partie | **E3** 5 partie | **E3** 10 parties |
|---|---|---|---|---|---|
| **200** | 9560 | 141 | 1721 | 83 | 45 |
| **400** | 37696 | 1112 | 12801 | 982 | 182 |
| **600** | 55074 | 6154 | 23811 | 3102 | 1098 |

Les produits **E2** et **E3** ont un comportement antibrouillard très favorable dans les compositions silicones. Les produits **E2** et **E3** présentent en outre l'avantage d'avoir une bonne solubilité dans la composition silicone. Lorsque 5 parties en poids d'additif antibrouillard E2 ou E3 sont mises en oeuvres la densité de brouillard mesurée à 600m/min est diminuée d'au moins un facteur 10.

### II) Préparation d'un revêtement silicone anti-adhérent sur un support polymère

La composition silicone du tableau 2 comprenant cinq parties en poids d'additif E3 a été enduite à l'aide d'un pilote d'enduction Rotomec sur un support polyester. La vitesse machine est de 50 m/min avec une puissance de lampe à mercure fixée à 100W/cm pour effectuer la réticulation sous UV. Ce dépôt est compris entre 0,9 et 1,1 g/m2. En sortie machine, les tests réalisés sont le « smear », le « rub-off », le « démouillage » et la mesure d'extractibles silicones.

### Tests effectués sur les supports enduits de revêtements silicone anti-adhérent:

**Smear** : Contrôle qualitatif de la polymérisation de surface par la méthode de la trace au doigt qui consiste à :
- Disposer de l'échantillon de support enduit de silicone à contrôler sur une surface plane et rigide ;
- Faire une trace avec le bout du doigt en appuyant modérément mais nettement ; et
- Examiner à l'œil la trace ainsi faite, de préférence en lumière rasante. On peut voir ainsi la présence d'une trace même très légère par la différence de brillance de la surface. L'appréciation est qualitative. On quantifie le « Smear » avec les notations suivantes :
   A : très bon, pas de trace au doigt
   B : un peu moins bon, trace à peine visible
   C : trace nette
   D : trace très nette et aspect huileux de la surface, produit à peine polymérisé.
   soit un note de A à D, du meilleur résultat au plus mauvais.

**Rub-off** : Contrôle de l'aptitude du silicone à adhérer sur le support flexible par gommage en aller-retour au doigt qui consiste à :
- Disposer l'échantillon de support enduit de silicone à contrôler sur une surface plane et rigide, la silicone étant sur la face supérieure
- Faire 10 Aller et Retour (A-R) avec le bout du doigt (sur une longueur de 10 cm environ) en appuyant modérément mais nettement.
- Examiner à l'œil l'apparition du gommage. Le gommage correspond à l'apparition d'une fine poudre blanche ou des petites boulettes qui roulent sous le doigt.

L'appréciation est qualitative. On quantifie le gommage avec les notations suivantes :
- 10 : très bon, pas d'apparition de gommage au bout de 10 A-R
- 1 : très mauvais, gommage dès le premier aller

La note correspond au nombre d'aller-retour (de 1 à 10) à partir duquel un gommage apparaît.

Soit une note de 1 à 10, du plus faible au meilleur résultat.

**Démouillage** : Appréciation du degré de polymérisation de la couche silicone par évaluation du transfert de silicone sur un adhésif mis en contact avec l'enduction à l'aide d'une encre de tension de surface normée. La méthode est la suivante :
- Sélectionner un échantillon d'environ 20 × 5 cm du papier enduit silicone à caractériser, pris dans le sens du déroulement (sens machine).
- Découper une longueur de « 15 cm de ruban adhésif, puis le déposer côté adhésif sur le papier à contrôler, sans plis, en exerçant 10 fois une pression par glissement du doigt sur la longueur du ruban adhésif. (Ruban adhésif « Scotch » de 3 M, référence 610, largeur: 25 mm).
- Enlever le ruban adhésif et le déposer à plat, partie adhésivée vers le haut.
- Déposer sur la partie adhésivée du ruban, avec un coton tige (à usage unique), une trace d'encre sur une longueur d'environ 10 cm (encres de marque SHERMAN ou FERARINI et BENELI de tension de surface « 30 dynes/cm et de viscosité 2 à 4 mPals). Déclencher immédiatement le chronomètre.
- On considère que l'on entre dans la phase du phénomène de démouillage lorsque le trait d'encre change d'aspect, arrêter alors le chronomètre.
- La dépose de l'encre sur la partie adhésivée du ruban doit se faire dans les 2 minutes suivant l'enduction silicone.
- Si le résultat obtenu est < 10 secondes, on estime qu'il y a migration de silicone sur l'adhésif, et que la polymérisation n'est pas complète.
- On donnera une note de 0 à 10 correspondant au temps écoulé en secondes avant l'observation du phénomène de démouillage.
- Si le résultat obtenu est 10 secondes, on estime que la polymérisation est complète. Dans ce cas, on donnera une note de 10 signifiant que le résultat est très bon.
- Noter la note obtenue et l'encre utilisée (nom, marque, tension de surface, viscosité).

**Extractibles** : Mesure de la quantité de silicone qui n'est pas greffée au réseau formé lors de la polymérisation. Ces silicones sont extraits du film par immersion d'échantillon dès la sortie machine dans la MIBK durant 24h minimum. Ceci est mesuré par spectroscopie à absorption de flamme. Le taux d'extractibles doit être maintenu inférieur à 8% et de préférence inférieur à 6%.

Les résultats des différents tests métiers sont présentés dans le tableau suivant.

**Tableau 2 : Résultats des tests métier sur les revêtements**

| Formulation - | Sans additif | 5 parties additif E3 |
|---|---|---|
| Dépôt (g/m²) | 1,01 | 0,97 |
| Smear | A | A |
| Rub-off | 10 | 10 |
| Démouillage | 10 | 10 |
| Extractibles ln-Line (100 cm²) % | 3,2 | 4,6 |

Les tests métiers de la formulation comprenant 5 parties d'additifs antibrouillard E3 sont satisfaisants. Il n'y a pas de dégradation des propriétés du revêtement obtenu.

**Release** : Des mesures de forces de pelage ont été effectuées avec l'adhésif normé TESA 7475 sur le support enduit de revêtement silicone. Les éprouvettes de l'article multicouche (adhésif en contact avec surface silicone) ont été conservées 1 jour à 23°C, 1 jour à 70°C et 7 jours à 70°C dans les conditions de pression requises, puis testées à faible vitesse de pelage selon le test FINAT 3 (FTM 3) connu de l'homme de l'art.

La force de décollement s'exprime en cN/inch et se mesure à l'aide d'un dynamomètre, après mise sous pression des échantillons soit à température ambiante (23°C) soit à plus haute température pour des tests de vieillissement accéléré (en général 70°C).

Les résultats sont présentés dans le Tableau 3 ci-dessous

**Tableau 3 : Force de décollement en cN/inch**

| Formulation | Sans additif | 5 parties additif E3 |
|---|---|---|
| 1d @ 23°C | 9,7 | 14 |
| 1d @ 70°C | 9,1 | 17 |
| 7d @ 70°C | 12,3 | 24 |

On observe une augmentation des forces de décollement mais elles restent tout à fait satisfaisantes pour l'application,

### Adhésion subséquente ou « Subséquent adhesion » (« SubAd » dans les tableaux);

Mesure de vérification de la conservation d'adhésivité des adhésifs (TESA 7475) ayant été en contact avec le revêtement silicone selon le test FINAT 11 (FTM 11) connu de l'homme de l'art. Ici l'éprouvette de référence est du PET et les adhésifs sont restés en contact avec la surface silicone à tester 1 jour à 70°C et 7 jours à 70°C.

Les résultats s'expriment en % de conservation de force adhésive du ruban de référence : CA = (Fm2/Fm1) x 100 en % avec :
Fm2 = Moyenne forces décollement ruban après contact 20 h avec support siliconé ; et
Fm1 = Moyenne forces décollement ruban sans contact avec support siliconé.

Les résultats sont consignés dans le Tableau 4 ci-après

**Tableau 4 : Adhésion subséquente (en %)**

| Formulation | Sans additif | 5 parties additif E3 |
|---|---|---|
| 1d @ 70°C | 79,7 | 72,6 |
| 7d @ 70°C | 80,4 | 70,1 |

La force de décollement et la mesure d'adhésion subséquente sont satisfaisantes même après vieliissement.

## Revendications

1. Procédé de lutte contre l'apparition de brouillard lors de l'enduction de supports flexibles par une composition silicone liquide **X,** réticulable par polyaddition, par déshydrogénocondensation, par polycondensation, par voie cationique ou par voie radicalaire, et précurseur de revêtement(s) silicone comprenant les étapes **I)** et **II)** suivantes :
**I)**la préparation de ladite composition silicone liquide **X** et
**II)** l'enduction de ladite composition silicone liquide **X** sur un support flexible à l'aide d'un dispositif d'enduction à cylindres,
ledit procédé étant **caractérisé en ce qu'**à l'étape **I)** on ajoute à ladite composition silicone liquide **X** un additif antibrouillard **E** obtenu en faisant réagir, de préférence pendant 30 minutes à 12 heures, à une température comprise entre 10°C et 100°C :
- pour 100 parties en poids d'au moins un organopolysiloxane **F** comprenant de 10 à 80 mmol de fonctions (méth)acrylate, et de préférence acrylate, pour 100 g d'organopolysiloxane **F,**
- de 0,01 à 1 parties en poids d'au moins un composé choisi parmi le groupe constitué par:
• un organopolysiloxane **G** comprenant de 85 à 400 mmol de fonctions (méth)acrylate, et de préférence acrylate, pour 100 g d'organopolysiloxane **G,**
• un composé organique **H** comprenant de 300 à 1000 mmol de fonctions (méth)acrylate, et de préférence acrylate, pour 100 g de composé organique **H,** et
• leurs mélanges, et
- de 5 à 40 parties en poids d'au moins un organopolysiloxane **N** comprenant de 10 à 80 mmol de fonctions amine pour 100 g d'organopolysiloxane **N,**
les quantités desdits composés **F, G, H** et **N** mises en oeuvre sont telles que le rapport molaire initial **Ri = nAcr/nH** est compris entre 3,8 et 7, où **nAcr** est le nombre de moles total de fonctions (méth)acrylate des composés **F, G et H** et **nH** est le nombre de moles d'atomes d'hydrogène liés à un atome d'azote de l'organopolysiloxane **N.**

2. Procédé de lutte contre l'apparition de brouillard lors de l'enduction de supports flexibles selon la revendication 1 dans lequel l'organopolysiloxane **N** est choisi parmi les organopolysiloxanes comprenant des motifs siloxy (I.1) et (I.2) de formules suivantes: 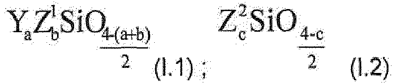 dans lesquelles :
- a= 1 ou 2, b= 0, 1 ou 2 et a+b= 1, 2 ou 3
- c = 1, 2 ou 3
- les symboles Y, identiques ou différents, représentent un groupe fonctionnel de formule (I.3) :
-E¹-(NH-G)ₕ-(NH₂)i (I.3)
dans laquelle :
- h = 0 ou 1;
- i= 0 ou 1 ;
- h+i = 1 ou 2 ;
- E¹ représente un radical hydrocarboné divalent aliphatique, cycloaliphatique ou aromatique comprenant de 1 à 30 atomes de carbone ; de préférence aliphatique contenant de 1 à 10 atomes de carbone ;
- lorsqu'il est présent, G représente un radical hydrocarboné aliphatique comprenant de 1 à 10 atomes de carbone, monovalent lorsque i=0 ou divalent lorsque i=1;
- les symboles Z¹ et Z², identiques ou différents, représentent un radical hydrocarboné monovalent ayant de 1 à 30 atomes de carbone et comprenant éventuellement une ou plusieurs insaturations et/ou un ou plusieurs atomes de fluor, un groupe hydroxyle, ou un radical-OR¹ avec R¹ qui représente un radical hydrocarboné en C₁-C₁₀ linéaire, cyclique ou ramifié, et de préférence Z¹ et Z² représentent un groupe hydrocarboné monovalent choisi parmi le groupe constitué par les groupes alkyles ayant de 1 à 8 atomes de carbone, les groupes alcényles ayant de 2 à 6 atomes de carbone et les groupes aryles ayant de 6 à 12 atomes de carbone comprenant éventuellement un ou plusieurs atomes de fluor, un groupe hydroxyle, ou un radical-OR¹ avec R¹ qui représente un radical hydrocarboné en C₁-C₁₀ linéaire, cyclique ou ramifié, et encore plus préférentiellement choisis parmi le groupe constitué par un groupe méthyle, éthyle, propyle, 3,3,3-trifluoropropyle, vinyle, hydroxyle, éthoxyle, méthoxyle, xylyle, tolyle et phényle ;
ledit organopolysiloxane **N** comprenant, par molécule, au moins deux motif siloxy (I.1) porteur d'au moins un groupe fonctionnel de formule (I.3).

3. Procédé de lutte contre l'apparition de brouillard lors de l'enduction de supports flexibles selon la revendication 2 dans lequel l'organopolysiloxane **N** est choisi parmi les organopolysiloxanes comprenant des motifs siloxy (1.1) et (I.2) de formules suivantes: 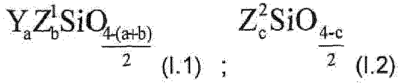 dans lesquelles :
- Y et Z¹ et Z² ont les définitions données à la revendication 2 ;
- a= 1 ou 2, b= 0, 1 ou 2 et a+b= 2 ou 3
- c = 2 ou 3.

4. Procédé de lutte contre l'apparition de brouillard lors de l'enduction de supports flexibles selon la revendication 1 dans lequel les organopolysiloxanes **F** et **G** comprennent :
a1) au moins un motif de formule (VI. 1) suivante :
R⁶ₐZ³_{b}SiO_{(4-a-b})/2 (VI.1)
formule dans laquelle :
- les symboles R⁶, identiques ou différents, représentent chacun un groupe alkyle en C₁ à C₁₈ linéaire ou ramifié, un groupe aryle ou aralkyle en Ce à C₁₂, éventuellement substitué, de préférence par des atomes d'halogène, ou un radical alkoxy -OR⁷ avec R⁷ étant un atome d'hydrogène ou un radical hydrocarboné comprenant de 1 à 10 atomes de carbone,
- les symboles Z³ sont des radicaux monovalent de formule -y-(Y')ₙ dans laquelle :
• y représente un radical polyvalent alkylène linéaire ou ramifié en C₁-C₁₈ éventuellement prolongé par des radicaux bivalents oxyalkylène ou polyoxyalkylène en C₁ à C₄ éventuellement substitué par un radical hydroxy,
• Y' représente un radical monovalent alcénylcarbonyloxy, et
• n est égal à 1, 2 ou 3, et de préférence n est égal à 1,
- a est un nombre entier égal à 0, 1 ou 2, b est un nombre entier égal à 1 ou 2
et la somme a+b= 1, 2 ou 3 ; et
a2) des motifs de formule (VI.2) suivante:
R⁸ₐSiO(₄₋ₐ₎/2 (VI.2)
formule dans laquelle :
- les symboles R⁸, identiques ou différents, représentent chacun un groupe alkyle en C₁ à C₁₈ linéaire ou ramifié, un groupe aryle ou aralkyle en C₆ à C₁₂, éventuellement substitué, de préférence par des atomes d'halogène, et
- a est un nombre entier égal à 0, 1, 2 ou 3.

5. Procédé de lutte contre l'apparition de brouillard lors de l'enduction de supports flexibles selon la revendication 1 dans lequel le composé organique **H** comprenant au moins deux fonctions (méth)acrylate est choisi parmi le groupe constitué par les alcanedioldiacrylates et les alcanedioldiméthacrylates, dont le 1,3-butylèneglycoldiacrylate, le 1,6-hexanedioldiacrylate, le 1,4-butanedioldiacrylate et le triacrylate de triméthylolpropane.

6. Procédé de lutte contre l'apparition de brouillard lors de l'enduction de supports flexibles selon la revendication 1 dans lequel le rapport molaire initial **Ri = nAcr/nH** est compris entre 4,5 et 7, préférentiellement entre 5 et 7 et encore plus préférentiellement entre 5,3 et 6,8.

7. Procédé de lutte contre l'apparition de brouillard lors de l'enduction de supports flexibles selon la revendication 1 ou 2 dans lequel ladite composition silicone liquide **X** précurseur de revêtement(s) silicone comprend :
- au moins un organopolysiloxane **A1** réticulable par voie radicalaire,
- au moins un photoamorceur radicalaire **C1,** et
- éventuellement au moins un système modulateur d'adhérence **K.**

8. Procédé de préparation de l'additif antibrouillard **E** en faisant réagir, de préférence pendant 30 minutes à 12 heures, à une température comprise entre 10°C et 100°C :
- pour 100 parties en poids d'au moins un organopolysiloxane **F** comprenant de 10 à 80 mmol de fonctions (méth)acrylate pour 100 g d'organopolysiloxane **F,**
- de 0,01 à 1 parties en poids d'au moins un composé choisi parmi le groupe constitué par :
• un organopolysiloxane **G** comprenant de 85 à 400 mmol de fonctions (méth)acrylate, et de préférence acrylate, pour 100 g d'organopolysiloxane **G,**
• un composé organique **H** comprenant de 300 à 1000 mmol de fonctions (méth)acrylate, et de préférence acrylate, pour 100 g de composé organique **H,** et
• leurs mélanges, et
- de 5 à 40 parties en poids d'au moins un organopolysiloxane **N** comprenant de 10 à 80 mmol de fonctions amine pour 100 g d'organopolysiloxane **N,**
les quantités desdits composés **F, G, H** et **N** mises en oeuvre sont telles que le rapport molaire initial **Ri = nAcr/nH** est compris entre 3,8 et 7 où **nAcr** est le nombre de moles total de fonctions (méth)acrylate des composés F, G et H et **nH** est le nombre de moles d'atomes d'hydrogène liés à un atome d'azote de l'organopolysiloxane **N.**

9. Additif antibrouillard **E** obtenu en faisant réagir, de préférence pendant 30 minutes à 12 heures, à une température comprise entre 10°C et 100°C :
- pour 100 parties en poids d'au moins un organopolysiloxane **F** comprenant de 10 à 80 mmol de fonctions (méth)acrylate pour 100 g d' organopolysiloxane **F,**
- de 0,01 à 1 parties en poids d'au moins un composé choisi parmi le groupe constitué par :
• un organopolysiloxane **G** comprenant de 85 à 400 mmol de fonctions (méth)acrylate, et de préférence acrylate, pour 100 g d'organopolysiloxane **G,**
• un composé organique **H** comprenant de 300 à 1000 mmol de fonctions (méth)acrylate, et de préférence acrylate, pour 100 g de composé organique **H,** et
• leurs mélanges, et
- de 5 à 40 parties en poids d'au moins un organopolysiloxane **N** comprenant de 10 à 80 mmol de fonctions amine pour 100 g d'organopolysiloxane **N,**
les quantités desdits composés **F, G, H** et **N** mises en oeuvre étant telles que le rapport molaire initial **Ri** = **nAcr/nH** est compris entre 3,8 et 7 où **nAcr** est le nombre de moles total de fonctions (méth)acrylate des composés **F, G et H** et **nH** est le nombre de moles d'atomes d'hydrogène liés à un atome d'azote de l'organopolysiloxane **N.**

10. Composition silicone liquide **X,** réticulable par polyaddition, par déshydrogénocondensation, par polycondensation, par voie cationique ou par voie radicalaire, comprenant un additif antibrouillard **E** obtenu selon la revendication 9.

11. Utilisation de l'additif antibrouillard **E** tel que défini selon la revendication **9** pour réduire l'apparition de brouillard lors de l'enduction de supports flexibles avec une composition silicone liquide **X** précurseur de revêtement(s) silicone.

## Patentansprüche

1. Verfahren zur Bekämpfung des Auftretens von Nebel beim Beschichten biegsamer Träger mit einer flüssigen Silikonzusammensetzung **X,** welche mittels Polyaddition, mittels Kondensation unter Wasserstoffabspaltung, mittels Polykondensation, auf kationischem Wege oder auf radikalischem Wege vernetzt werden kann und eine Vorläufersubstanz einer/von Silikonbeschichtung(en) darstellt, wobei es die folgenden Schritte **I)** und **II)** umfasst:
**I)** Zubereiten der flüssigen Silikonzusammensetzung **X** und
**II)** Beschichten des biegsamen Trägers mit der flüssigen Silikonzusammensetzung **X** mit Hilfe einer Beschichtungsvorrichtung, die über Zylinder verfügt, wobei das Verfahren **dadurch gekennzeichnet ist, dass** im Schritt **I)** der flüssigen Silikonzusammensetzung **X** ein nebelbekämpfender Zusatzstoff **E** zugesetzt wird, der erhalten wurde, indem Folgendes bei einer Temperatur im Bereich von 10 °C bis 100 °C miteinander umgesetzt wurde, vorzugsweise über einen Zeitraum von 30 Minuten bis 12 Stunden:
- auf 100 Gewichtsteile mindestens eines Organopolysiloxans **F,** das 10 bis 80 mmol an funktionellen (Meth)acrylatgruppen, wobei es sich vorzugsweise um Acrylat handelt, auf 100 g an Organopolysiloxan **F** umfasst,
- 0,01 bis 1 Gewichtsteile mindestens einer Verbindung, die aus der Gruppe ausgewählt ist, welche aus Folgendem besteht:
• einem Organopolysiloxan **G,** das 85 bis 400 mmol an funktionellen (Meth)acrylatgruppen, wobei es sich vorzugsweise um Acrylat handelt, auf 100 g an Organopolysiloxan **G** umfasst,
• einer organischen Verbindung **H,** die 300 bis 1000 mmol an funktionellen (Meth)acrylatgruppen, wobei es sich vorzugsweise um Acrylat handelt, auf 100 g an organischer Verbindung **H** umfasst, und
• deren Mischungen, und
- 5 bis 40 Gewichtsteile mindestens eines Organopolysiloxans **N,** das 10 bis 80 mmol an funktionellen Amingruppen auf 100 g an Organopolysiloxan **N** umfasst, wobei die Mengen der Verbindungen **F, G, H** und **N,** welche eingesetzt werden, derart sind, dass das anfängliche Molverhältnis **Ri = nAcr/nH** im Bereich von 3, 8 bis 7 liegt, wobei **nAcr** die Gesamtmolanzahl an funktionellen (Meth)acrylatgruppen der Verbindungen **F, G** und **H** ist und **nH** die Molanzahl an Wasserstoffatomen ist, welche an ein Stickstoffatom des Organopolysiloxans **N** gebunden sind.

2. Verfahren zur Bekämpfung des Auftretens von Nebel beim Beschichten biegsamer Träger gemäß Anspruch 1, wobei das Organopolysiloxan **N** aus den Organopolysiloxanen ausgewählt ist, welche Siloxybausteine (1.1) und (1.2) nach den folgenden Formeln umfassen: 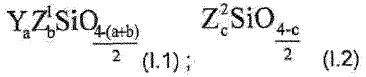 wobei:
- a = 1 oder 2, b = 0, 1 oder 2 und a+b = 1, 2 oder 3
- c = 1, 2 oder 3
- die Zeichen Y, welche identisch oder verschiedenartig sind, für eine funktionelle Gruppe nach Formel (1.3) stehen:
-E¹-(NH-G)ₕ-(NH₂)i (1.3)
wobei:
- h = 0 oder 1;
- i = 0 oder 1;
- h+i = 1 oder 2;
- E¹ für einen zweibindigen Kohlenwasserstoffrest aliphatischer, cycloaliphatischer oder aromatischer Art steht, der 1 bis 30 Kohlenstoffatome umfasst; wobei er vorzugsweise aliphatischer Art ist und 1 bis 10 Kohlenstoffatome enthält;
- G, sofern es vorliegt, für einen aliphatischen Kohlenwasserstoffrest steht, der 1 bis 10 Kohlenstoffatome umfasst, wobei er einbindig ist, wenn i = 0 ist, und zweibindig ist, wenn i = 1 ist;
- die Zeichen Z¹ und Z², welche identisch oder verschiedenartig sind, für einen einbindigen Kohlenwasserstoffrest stehen, der 1 bis 30 Kohlenstoffatome aufweist und möglicherweise eine oder mehrere ungesättigte Stellen und/oder ein oder mehrere Fluoratome, eine Hydroxylgruppe oder einen OR₁-Rest umfasst, wobei R¹ einen C₁-C₁₀-Kohlenwasserstoffrest geradkettiger, zyklischer oder verzweigter Art steht, und wobei Z¹ und Z² vorzugsweise für eine einbindige Kohlenwasserstoffgruppe stehen, die aus der Gesamtheit ausgewählt ist, welche aus den Alkylgruppen mit 1 bis 8 Kohlenstoffatomen, den Alkenylgruppen mit 2 bis 5 Kohlenstoffatomen und den Arylgruppen mit 6 bis 12 Kohlenstoffatomen, die möglicherweise ein oder mehrere Fluoratome umfassen, einer Hydroxylgruppe oder einem OR¹-Rest besteht, wobei R¹ für einen C₁-C₁₀-Kohlenwasserstoffrest geradkettiger, zyklischer oder verzweigter Art steht, wobei sie mit noch stärkerem Vorzug aus der Gesamtheit ausgewählt sind, die aus einer Methyl-, Ethyl-, Propyl-, 3,3,3-Trifluorpropyl-, Vinyl-, Hydroxyl-, Ethoxyl-, Methoxyl-, Xylyl-, Tolyl- und Phenylgruppe besteht;
wobei das Organopolysiloxan **N,** pro Molekül, mindestens zwei Siloxy-Bausteine (1.1) umfasst, die mit mindestens einer funktionellen Gruppe nach Formel (1.3) versehen sind.

3. Verfahren zur Bekämpfung des Auftretens von Nebel beim Beschichten biegsamer Träger gemäß Anspruch 2, wobei das Organopolysiloxan **N** aus den Organopolysiloxanen ausgewählt ist, welche Siloxybausteine (1.1) und (1.2) nach den folgenden Formeln umfassen: 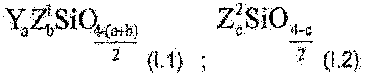 wobei:
- Y und Z¹ und Z² die Bedeutungen haben, wie sie in Anspruch 2 angegeben sind;
- a = 1 oder 2, b = 0, 1 oder 2 und a+b = 2 oder 3
- c = 2 oder 3.

4. Verfahren zur Bekämpfung des Auftretens von Nebel beim Beschichten biegsamer Träger gemäß Anspruch 1, wobei die Organopolysiloxane **F** und **G** Folgendes umfassen:
a1) mindestens einen Baustein nach der folgenden Formel (VI.1):
R⁶ₐZ³_{b}SiO_{(4-a-b)}/2 (VI. 1)
wobei in dieser Formel:
- die Zeichen R⁶, welche identisch oder verschiedenartig sind, jeweils für eine geradkettige oder verzweigte C₁-C₁₈-Alkylgruppe, eine C₆-C₁₂-Aryl- oder Aralkylgruppe, die möglicherweise substituiert ist, vorzugsweise mit Halogenatomen, oder für einen OR⁷-Alkoxyrest stehen, wobei R⁷ einem Wasserstoffatom oder einem Kohlenwasserstoffrest entspricht, welcher 1 bis 10 Kohlenstoffatome umfasst,
- die Zeichen Z³ einbindigen Resten nach der Formel -y-(Y')ₙ entsprechen, wobei:
• Y für einen mehrbindigen C₁-C₁₈-Alkylenrest geradkettiger oder verzweigter Art steht, der sich möglicherweise in zweibindigen C₁-C₄-Alkylenoxy- oder Polyalkylenoxyresten fortsetzt, welche möglicherweise mit einem Hydroxylrest substituiert sind,
• Y' für einen einbindigen Alkenylcarbonyloxyrest steht, und
• n gleich 1, 2 oder 3 ist, wobei n vorzugsweise gleich 1 ist,
- a einer ganzen Zahl entspricht, die gleich 0, 1 oder 2 ist, b einer ganzen Zahl entspricht, die gleich 1 oder 2 ist, und die Summe a+b = 1, 2 oder 3 ist; und
a2) Bausteine nach der folgenden Formel (VI.2):
R⁸ₐSiO₍₄₋ₐ₎/2 (VI.2)
wobei in dieser Formel:
- die Zeichen R⁸, welche identisch oder verschiedenartig sind, jeweils für eine geradkettige oder verzweigte C₁-C₁₈-Alkylgruppe, eine C₆-C₁₂-Aryl- oder Aralkylgruppe stehen, die möglicherweise substituiert ist, vorzugsweise mit Halogenatomen, und
- a für eine ganze Zahl steht, die gleich 0, 1, 2 oder 3 ist.

5. Verfahren zur Bekämpfung des Auftretens von Nebel beim Beschichten biegsamer Träger gemäß Anspruch 1, wobei die organische Verbindung H, welche mindestens zwei funktionelle (Meth)acrylatgruppen umfasst, aus der Gruppe ausgewählt ist, welche aus den Alkandioldiacrylaten, und den Alkandioldimethacrylaten besteht, wobei dazu 1,3-Butylenglykoldiacrylat, 1,6-Hexandioldiacrylat, 1,4-Butandioldiacrylat und Trimethylolpropantriacrylat gehören.

6. Verfahren zur Bekämpfung des Auftretens von Nebel beim Beschichten biegsamer Träger gemäß Anspruch 1, wobei das anfängliche Molverhältnis **Ri = nAcr/nH** im Bereich von 4, 5 bis 7, vorzugsweise von 5 bis 7 und mit noch stärkerem Vorzug von 5,3 bis 6,8 liegt.

7. Verfahren zur Bekämpfung des Auftretens von Nebel beim Beschichten biegsamer Träger gemäß Anspruch 1 oder 2, wobei die flüssige Silikonzusammensetzung **X,** welche eine Vorläufersubstanz einer/von Silikonbeschichtung(en) darstellt, Folgendes umfasst:
- mindestens ein Organosiloxan **A1,** das auf radikalischem Wege vernetzt werden kann,
- mindestens einen radikalischen Photoinitiator **C1,** und
- möglicherweise mindestens ein haftungsmodulierendes System **K.**

8. Verfahren zur Herstellung des nebelbekämpfenden Zusatzstoffs **E,** wobei Folgendes bei einer Temperatur im Bereich von 10 °C bis 100 °C miteinander umgesetzt wird, vorzugsweise über einen Zeitraum von 30 Minuten bis 12 Stunden:
- auf 100 Gewichtsteile mindestens eines Organopolysiloxans **F,** das 10 bis 80 mmol an funktionellen (Meth)acrylatgruppen auf 100 g an Organopolysiloxan **F** umfasst,
- 0,01 bis 1 Gewichtsteile mindestens einer Verbindung, die aus der Gruppe ausgewählt ist, welche aus Folgendem besteht:
• einem Organopolysiloxan **G,** das 85 bis 400 mmol an funktionellen (Meth)acrylatgruppen, wobei es sich vorzugsweise um Acrylat handelt, auf 100 g an Organopolysiloxan **G** umfasst,
• einer organischen Verbindung **H,** die 300 bis 1000 mmol an funktionellen (Meth)acrylatgruppen, wobei es sich vorzugsweise um Acrylat handelt, auf 100 g an organischer Verbindung **H** umfasst, und
• deren Mischungen, und
- 5 bis 40 Gewichtsteile mindestens eines Organopolysiloxans **N,** das 10 bis 80 mmol an funktionellen Amingruppen auf 100 g an Organopolysiloxan **N** umfasst, wobei die eingesetzten Mengen der Verbindungen **F, G, H** und **N** derart sind, dass das anfängliche Molverhältnis **Ri** = **nAcr/nH** im Bereich von 3,8 bis 7 liegt, wobei **nAcr** die Gesamtmolanzahl an funktionellen (Meth)acrylatgruppen der Verbindungen F, G und H ist und **nH** die Molanzahl an Wasserstoffatomen ist, welche an ein Stickstoffatom des Organopolysiloxans **N** gebunden sind.

9. Nebelbekämpfender Zusatzstoff **E,** wobei er erhalten wird, indem Folgendes bei einer Temperatur im Bereich von 10 °C bis 100 °C miteinander umgesetzt wird, vorzugsweise über einen Zeitraum von 30 Minuten bis 12 Stunden:
- auf 100 Gewichtsteile mindestens eines Organopolysiloxans **F,** das 10 bis 80 mmol an funktionellen (Meth)acrylatgruppen auf 100 g an Organopolysiloxan **F,** umfasst,
- 0,01 bis 1 Gewichtsteile mindestens einer Verbindung, die aus der Gruppe ausgewählt ist, welche aus Folgendem besteht:
• einem Organopolysiloxan **G,** das 85 bis 400 mmol an funktionellen (Meth)acrylatgruppen, wobei es sich vorzugsweise um Acrylat handelt, auf 100 g an Organopolysiloxan **G** umfasst,
• einer organischen Verbindung **H,** die 300 bis 1000 mmol an funktionellen (Meth)acrylatgruppen, wobei es sich vorzugsweise um Acrylat handelt, auf 100 g an organischer Verbindung **H** umfasst, und
• deren Mischungen, und
- 5 bis 40 Gewichtsteile mindestens eines Organopolysiloxans **N,** das 10 bis 80 mmol an funktionellen Amingruppen auf 100 g an Organopolysiloxan **N** umfasst, wobei die eingesetzten Mengen der Verbindungen **F, G, H** und **N** derart sind, dass das anfängliche Molverhältnis **Ri** = **nAcr/nH** im Bereich von 3,8 bis 7 liegt, wobei **nAcr** die Gesamtmolanzahl an funktionellen (Meth)acrylatgruppen der Verbindungen **F, G** und **H** ist und **nH** die Molanzahl an Wasserstoffatomen ist, welche an ein Stickstoffatom des Organopolysiloxans **N** gebunden sind.

10. Flüssige Silikonzusammensetzung **X,** die mittels Polyaddition, mittels Kondensation unter Wasserstoffabspaltung, mittels Polykondensation, auf kationischem Wege oder auf radikalischem Wege vernetzt werden kann, wobei sie einen nebelbekämpfenden Zusatzstoff **E** umfasst, welcher gemäß dem Anspruch 9 erhalten wurde.

11. Verwendung des nebelbekämpfenden Zusatzstoffs **E** gemäß der Begriffsbestimmung in Anspruch **9,** um das Auftreten von Nebel beim Beschichten biegsamer Träger mit einer flüssigen Silikonzusammensetzung **X** zu verringern, welche eine Vorläufersubstanz einer/von Silikonbeschichtung(en) darstellt.

## Claims

1. Process for combating the appearance of mist during the coating of flexible supports with a liquid silicone composition **X** which is crosslinkable by polyaddition, by dehydrogenative condensation, by polycondensation, by the cationic route or by the radical route and is a precursor of silicone coating(s), comprising the following steps **I)** and **II):**
**I)** preparing said liquid silicone composition **X** and
**II)** coating said liquid silicone composition **X** on a flexible support using a roll coating device,
said process being **characterized in that** in step **I)** said liquid silicone composition **X** is admixed with an anti-misting additive **E** obtained by reacting, preferably for 30 minutes to 12 hours, at a temperature of between 10°C and 100°C:
- per 100 parts by weight of at least one organopolysiloxane **F** comprising from 10 to 80 mmol of (meth)acrylate, and preferably acrylate, functions per 100 g of organopolysiloxane **F,**
- from 0.01 to 1 part by weight of at least one compound chosen from the group consisting of:
• an organopolysiloxane **G** comprising from 85 to 400 mmol of (meth) acrylate, and preferably acrylate, functions per 100 g of organopolysiloxane **G,**
• an organic compound **H** comprising from 300 to 1000 mmol of (meth)acrylate, and preferably acrylate, functions per 100 g of organic compound **H,** and
• mixtures thereof, and
- from 5 to 40 parts by weight of at least one organopolysiloxane **N** comprising from 10 to 80 mmol of amine functions per 100 g of organopolysiloxane **N,**
the amounts of said compounds **F, G, H** and **N** employed being such that the initial molar ratio **Ri = nAcr/nH** is between 3.8 and 7, where **nAcr** is the total number of moles of (meth)acrylate functions of compounds **F, G** and **H** and **nH** is the number of moles of hydrogen atoms bonded to a nitrogen atom of the organopolysiloxane **N.**

2. Process for combating the appearance of mist during the coating of flexible supports according to Claim 1, in which the organopolysiloxane **N** is chosen from the organopolysiloxanes comprising siloxy units (1.1) and (1.2) of the following formulae: 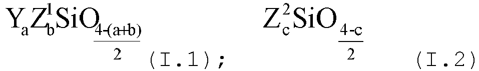 in which:
- a = 1 or 2, b = 0, 1 or 2 and a+b = 1, 2 or 3
- c = 1, 2 or 3
- the symbols Y, which may be identical or different, represent a functional group of formula (1.3):
-E¹-(NH-G)ₕ- (NH₂)ᵢ (1.3)
in which:
- h = 0 or 1;
- i = 0 or 1;
- h+i = 1 or 2;
- E¹ represents a divalent aliphatic, cycloaliphatic or aromatic hydrocarbon radical comprising from 1 to 30 carbon atoms, preferably aliphatic and containing from 1 to 10 carbon atoms;
- when it is present, G represents an aliphatic hydrocarbon radical comprising from 1 to 10 carbon atoms which is monovalent when i = 0 and divalent when i = 1;
- the symbols Z¹ and Z², which may be identical or different, represent a monovalent hydrocarbon radical having from 1 to 30 carbon atoms and optionally comprising one or more unsaturations and/or one or more fluorine atoms, a hydroxyl group or a radical -OR¹ with R¹ representing a linear, cyclic or branched C₁-C₁₀ hydrocarbon radical, and preferably Z¹ and Z² represent a monovalent hydrocarbon group chosen from the group consisting of alkyl groups having from 1 to 8 carbon atoms, alkenyl groups having from 2 to 6 carbon atoms and aryl groups having from 6 to 12 carbon atoms optionally comprising one or more fluorine atoms, a hydroxyl group, or a radical -OR¹ with R¹ representing a linear, cyclic or branched C₁-C₁₀ hydrocarbon radical, and even more preferentially chosen from the group consisting of a methyl, ethyl, propyl, 3,3,3-trifluoropropyl, vinyl, hydroxyl, ethoxyl, methoxyl, xylyl, tolyl and phenyl group;
said organopolysiloxane **N** comprising, per molecule, at least two siloxy units (1.1) bearing at least one functional group of formula (1.3).

3. Process for combating the appearance of mist during the coating of flexible supports according to Claim 2, in which the organopolysiloxane **N** is chosen from the organopolysiloxanes comprising siloxy units (1.1) and (1.2) of the following formulae: 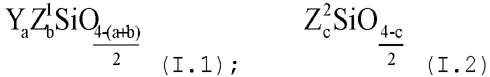 in which:
- Y and Z¹ and Z² have the definitions given in Claim 2;
- a = 1 or 2, b = 0, 1 or 2 and a+b = 2 or 3
- c = 2 or 3.

4. Process for combating the appearance of mist during the coating of flexible supports according to Claim 1, in which the organopolysiloxanes **F** and **G** comprise:
a1) at least one unit of the following formula (VI.1) :
R⁶ₐZ³_{b}SiO_{(4-a-b)}/2 (VI.1)
in which formula:
- the symbols R⁶, which may be identical or different, each represent a linear or branched C₁ to C₁₈ alkyl group, a C₆ to C₁₂ aryl or aralkyl group, optionally substituted, preferably by halogen atoms, or an alkoxy radical -OR⁷ with R⁷ being a hydrogen atom or a hydrocarbon radical comprising from 1 to 10 carbon atoms,
- the symbols Z³ are monovalent radicals of formula -y-(Y')ₙ in which:
• y represents a linear or branched C₁-C₁₈ polyvalent alkylene radical optionally extended by divalent C₁ to C₄ oxyalkylene or polyoxyalkylene radicals, which is optionally substituted by a hydroxy radical,
• Y' represents a monovalent alkenylcarbonyloxy radical, and
• n is equal to 1, 2 or 3, and preferably n is equal to 1,
- a is an integer equal to 0, 1 or 2, b is an integer equal to 1 or 2 and the sum a+b = 1, 2 or 3; and
a2) units of the following formula (VI.2):
R⁸ₐSiO(₄₋ₐ₎/2 (VI. 2)
in which formula:
- the symbols R⁸, which may be identical or different, each represent a linear or branched C₁ to C₁₈ alkyl group, a C₆ to C₁₂ aryl or aralkyl group, optionally substituted, preferably by halogen atoms, and
- a is an integer equal to 0, 1, 2 or 3.

5. Process for combating the appearance of mist during the coating of flexible supports according to Claim 1, in which the organic compound **H** comprising at least two (meth)acrylate functions is chosen from the group consisting of alkanediol diacrylates and alkanediol dimethacrylates, including 1,3-butylene glycol diacrylate, 1,6-hexanediol diacrylate, 1,4-butanediol diacrylate and trimethylolpropane triacrylate.

6. Process for combating the appearance of mist during the coating of flexible supports according to Claim 1, in which the initial molar ratio **Ri = nAcr/nH** is between 4.5 and 7, preferentially between 5 and 7 and even more preferentially between 5.3 and 6.8.

7. Process for combating the appearance of mist during the coating of flexible supports according to Claim 1 or 2, in which said liquid silicone composition **X** which is a precursor of silicone coating(s) comprises:
- at least one organopolysiloxane **A1** which is crosslinkable by the radical route,
- at least one radical photoinitiator **C1,** and
- optionally at least one adhesion modulator system **K.**

8. Process for preparing the anti-misting additive **E** by reacting, preferably for 30 minutes to 12 hours, at a temperature of between 10°C and 100°C:
- per 100 parts by weight of at least one organopolysiloxane **F** comprising from 10 to 80 mmol of (meth)acrylate functions per 100 g of organopolysiloxane **F,**
- from 0.01 to 1 part by weight of at least one compound chosen from the group consisting of:
• an organopolysiloxane **G** comprising from 85 to 400 mmol of (meth)acrylate, and preferably acrylate, functions per 100 g of organopolysiloxane **G,**
• an organic compound **H** comprising from 300 to 1000 mmol of (meth)acrylate, and preferably acrylate, functions per 100 g of organic compound **H,** and
• mixtures thereof, and
- from 5 to 40 parts by weight of at least one organopolysiloxane **N** comprising from 10 to 80 mmol of amine functions per 100 g of organopolysiloxane **N,**
the amounts of said compounds **F, G, H** and **N** employed being such that the initial molar ratio **Ri** = **nAcr/nH** is between 3.8 and 7, where **nAcr** is the total number of moles of (meth)acrylate functions of compounds F, G and H and **nH** is the number of moles of hydrogen atoms bonded to a nitrogen atom of the organopolysiloxane **N.**

9. Anti-misting additive **E** obtained by reacting, preferably for 30 minutes to 12 hours, at a temperature of between 10°C and 100°C:
- per 100 parts by weight of at least one organopolysiloxane **F** comprising from 10 to 80 mmol of (meth)acrylate functions per 100 g of organopolysiloxane **F,**
- from 0.01 to 1 part by weight of at least one compound chosen from the group consisting of:
• an organopolysiloxane **G** comprising from 85 to 400 mmol of (meth)acrylate, and preferably acrylate, functions per 100 g of organopolysiloxane **G,**
• an organic compound **H** comprising from 300 to 1000 mmol of (meth)acrylate, and preferably acrylate, functions per 100 g of organic compound **H,** and
• mixtures thereof, and
- from 5 to 40 parts by weight of at least one organopolysiloxane **N** comprising from 10 to 80 mmol of amine functions per 100 g of organopolysiloxane **N,**
the amounts of said compounds **F, G, H** and **N** employed being such that the initial molar ratio **Ri** = **nAcr/nH** is between 3.8 and 7, where **nAcr** is the total number of moles of (meth)acrylate functions of compounds **F, G** and **H** and **nH** is the number of moles of hydrogen atoms bonded to a nitrogen atom of the organopolysiloxane **N.**

10. Liquid silicone composition **X** which is crosslinkable by polyaddition, by dehydrogenative condensation, by polycondensation, by the cationic route or by the radical route, comprising an anti-misting additive **E** obtained according to Claim 9.

11. Use of the anti-misting additive **E** as defined in accordance with Claim 9 for reducing the appearance of mist during the coating of flexible supports with a liquid silicone composition **X** which is a precursor of silicone coating(s).
